(19) Europäisches Patentamt / European Patent Office / Office européen des brevets

(11) **EP 3 545 634 B1**

(12) **EUROPEAN PATENT SPECIFICATION**

(45) Date of publication and mention
of the grant of the patent:
**07.08.2024 Bulletin 2024/32**

(21) Application number: **16805887.3**

(22) Date of filing: **22.11.2016**

(51) International Patent Classification (IPC):
*H04J 3/06* *(2006.01)*

(52) Cooperative Patent Classification (CPC):
**H04J 3/0667**

(86) International application number:
**PCT/GB2016/053633**

(87) International publication number:
**WO 2018/096305 (31.05.2018 Gazette 2018/22)**

(54) **METHODS AND SYSTEMS FOR DETERMINING OPTIMAL MESSAGES**

VERFAHREN UND SYSTEME ZUM BESTIMMEN OPTIMALER NACHRICHTEN

PROCÉDÉS ET SYSTÈMES POUR DÉTERMINER DES MESSAGES OPTIMAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.10.2019 Bulletin 2019/40**

(73) Proprietors:
• **Khalifa University of Science and Technology
Abu Dhabi (AE)**
• **British Telecommunications Plc
London EC1A 7AJ (GB)**
• **Emirates Telecommunications Corporation
Abu-Dhabi (AE)**

(72) Inventors:
• **CHALOUPKA, Zdenek
53705, Chrudim IV (CZ)**
• **BOYD, Ivan
Abu Dhabi (AE)**

(74) Representative: **J A Kemp LLP
80 Turnmill Street
London EC1M 5QU (GB)**

(56) References cited:
**EP-A1- 1 990 938      EP-A1- 2 026 485
WO-A1-2015/049481   WO-A1-2016/103227
US-A1- 2010 020 909**

• **CHALOUPKA ZDENEK ET AL: "Clock
Synchronization Over Communication Paths
With Queue-Induced Delay Asymmetries", IEEE
COMMUNICATIONS LETTERS, IEEE SERVICE
CENTER, PISCATAWAY, NJ, US, vol. 18, no. 9, 1
September 2014 (2014-09-01), pages 1551 - 1554,
XP011558412, ISSN: 1089-7798, [retrieved on
20140908], DOI: 10.1109/LCOMM.2014.2341604**

**EP 3 545 634 B1**

**Description**

Field of the Invention

The present invention relates to methods and systems for determining optimal messages transmitted over a packet network. It is particularly, but not exclusively, related to methods and systems which identify optimal messages in both forward and reverse transmission directions and make use of these messages in a frequency and phase offset synchronization estimation algorithm (for example under IEEE 1588 PTP).

Background of the Invention

Timing synchronization using a protocol such as IEEE 1588 PTP and a well-designed slave clock recovery mechanism can provide time synchronization in the sub-microsecond level and lower. Time synchronization requires an accurate measurement of the communication path delay between the time server (master) and the client (slave) in order to compute the time offset between them.

It has been observed by many researchers and telecom engineers that Packet Delay Variation (PDV) has the most significant impact on the precision and accuracy of the synchronization algorithms deployed over packet networks (over protocols like IEEE 1588v2 PTP, or NTP). In order to mitigate PDV a number of techniques can be employed (filtering, packet selection, etc.). All these techniques have one thing in common: the need to find a reliable and easily detectable reference that does not change (vary) significantly over time.

In most existing approaches, the path delay estimation is based on the important assumption that the time delay from master to slave is equal to that from slave to master. However, in reality, the communication paths are not perfectly symmetric, mainly due to dissimilar forward and reverse physical link delays and queuing delays. Even in cases where the physical link delays are known and properly compensated for during clock synchronization, queuing delays which are variable can still exist when timing messages go through the packet network and queued for forwarding. In particular, the processing and buffering of packets in network devices (switches, routers, etc.) introduce variations in the time latency of packets traversing the packet network. This mainly happens when timing transfer is done in an end-to-end manner without any form timing assistance from the network to help mitigate the effects of the variable queuing delays.

Variable queueing delays and any asymmetry in the forward and reverse queuing delays directly lead to increased errors in the phase offset estimation between a master and slave.

One known approach to improve frequency synchronization between the slave and the master clocks is to use packet selection to pick a set of Minimally Delayed Packets (MDPs), sometimes referred to as "lucky" packets. MDPs will occur quite frequently in telecom networks where traffic load does not cross certain threshold (usually 50% load) and there is a limited number of network interconnecting devices (up to 10 enterprise switches, see ITU-T G.8261). The MDP(s) are selected per window of samples and only these packets are used in the updating of the estimation algorithm. US2015/0163154 is an example of such a method.

There are a number of questions that need to be answered to enable MDPs to be used for reliable time & frequency synchronization:

a) What is the best way to make use of MDPs to synchronize a slave clock to a master?

b) How can the MDP be detected using a slave device clock, when the slave clock is both skewed and offset from the master clock?

c) How can MDP detection be implemented during higher load conditions, where MDPs occur only once or twice during a typical window length of 60 seconds?

d) How can time & frequency synchronization accuracy be maintained during the period of time from one MDP until the next occurrence?

For frequency synchronisation, packets from one direction only (e.g., the forward direction) can be used by a frequency estimation algorithm. However for phase synchronisation, both forward and reverse packets are required. Selecting a minimally delayed packet in the forward direction does not mean that the corresponding message response of the two-way exchange in the reverse direction is also minimally delayed. Indeed this is highly unlikely, even when the network loads in the forward and reverse directions are also almost the same, unless both paths are very lightly loaded. The same is true if the minimally delayed packet in the reverse direction is selected; the corresponding forward packet is most probably not minimally delayed.

**EP 3 545 634 B1**

EP 1,990,938A discloses a method for synchronizing a clock of a network component with a clock of a further network component communicatively connected to the network component in a network and a network component, whereby the method comprises the following steps: determining a set of forward transition delays for transmission of messages from the network component to the further network component and a set of corresponding backward transition delays for transmission of messages from the further network component to the network component, selecting a minimum forward transition delay from the set of forward transition delays, selecting a minimum backward transition delay from the set of backward transition delays, deriving an estimated value for an offset between the clock of the network component and the clock of the further network component from the selected minimum forward transition delay and minimum backward transition delay, and adjusting the clock of the network component in accordance with the estimated value for the offset estimate.

WO 2016/103227A discloses a method for time synchronizing one or more devices in a control network using a first device. The method comprises selecting a first device from information of the topology of the control network. The method further comprises sending a first set of packets to the second device, receiving a first set of delay requests in response to the first set of packets, and sending a first set of delay responses in response to the first set of delay requests. The method further comprises, determining a first set of forward times and first set of backward times. The method further comprises, determining a first minimum forward time and a first minimum backward time. Further the method comprises determining a first correction factor. The method also comprises, applying the first correction factor to a clock provided at the second device and storing the first correction factor.

Accordingly, an object of the present invention is to provide a packet selection approach which is particularly well suited to phase synchronisation.

Further objects of the present invention are to provide a packet selection approach which exhibits significant improvements in the responses to the above questions.

Summary of the Invention

Aspects of the present invention provide for methods and systems which separately identify the least delayed timing messages in the forward and reverse directions and use these to create a composite timing message for use in estimation of phase offset.

A first aspect of the present invention provides a method of estimating the phase offset between a master clock in a server and a slave clock in a client, the server and the client being in communication over a network, the method including the steps of: within a time window of predetermined duration, exchanging timing messages between the server and the client and recording timestamps which are the times of sending and of receipt of those messages according to the master and slave clocks; determining, from those timestamps, a first plurality of timestamp pairs, which are the times of sending and receipt associated with the least delayed timing messages sent from the server to the client in the window; determining, from those timestamps, a second plurality of timestamp pairs, which are the times of sending and receipt associated with the least delayed timing messages sent from the client to the server in the window; generating, from the first and second plurality of timestamp pairs a plurality of composite timing messages, each of which includes one of said first plurality of timestamp pairs and one of said second plurality of timestamp pairs; using said plurality of composite timing messages to estimate the phase offset between the master clock and the slave clock.

Preferably the composite timing messages are also used to estimate the skew between the master clock and the slave clock.

The network may be a packet network (using technologies such Ethernet, IP, MPLS, etc.).

The timing messages are preferably timing messages under the IEEE 1588 Precision Time Protocol (PTP).

The method of this aspect can identify a set of minimally delayed packets (MDPs) or timing messages in the forward and reverse directions within a window of samples. Composites of these MDPs can be created and these composites represent packets or timing messages which would be minimally delayed in both the forward and reverse directions. As these composites are minimally delayed in both directions, their variability, magnitude and the degree of asymmetry are all minimised. These composites are therefore very valuable timing messages to use to update a Kalman filter (or any other) estimation algorithm.

The composite timing messages generated in the method of this aspect are ideal for updating the estimation algorithm for phase and frequency synchronisation as they are minimally delayed, have lower variance and suffer less asymmetry than any other timing messages in the window of samples from which they were created. Updating the estimation algorithm with better data can improve the accuracy of the estimation process.

The composite timing messages may also include further time information, either derived directly from the timestamps or calculated from the least delayed timing messages from which the composite timing message is generated.

In certain embodiments, said estimation of the phase offset includes operating a Kalman filter using the timestamps of said timing messages, and in particular may include the steps of: initialising the Kalman filter by operating it using the measured timestamps of said timing messages until the estimates of the phase offset and skew are estimated

3

to within a predetermined accuracy; and then repeatedly for each time window: operating the Kalman filter in prediction only mode to estimate the instantaneous phase offset based on the state vector derived from the composite timing message or messages from the previous time window; generating the composite timing message or messages for the current time window;

and at the end of each time window, updating the Kalman filter with the values from the composite timing message or messages from the time window just ended.

In this manner, the Kalman filter can operate only on timing messages which have been identified as being minimally delayed and optimal. As there are a reduced number of these (compared, for example, to operating the estimation on timestamps from every exchange of timing messages), the update can be performed quickly at the end of each window, preferably between the last timing message of the preceding window and the first timing message of the next window.

The initialising step can be accomplished by a number of means, such as, for example, identifying lightly loaded conditions and operating the Kalman filter on each timestamp under such conditions.

Whilst the above embodiments use a Kalman filter, it will be appreciated that similar principles can be applied to other estimation/prediction models such as those described in Bletsas et al. [3].

Preferably the method further includes the steps of: calculating, for each of said least delayed timing messages, an estimate of the phase offset; and calculating, for each of said composite timing messages, an estimated mean phase offset which is the geometric mean of: the phase offset calculated for the timing message associated with said one of said first plurality of timestamps and the phase offset calculated for the timing message associated with said one of said second plurality of timestamps.

The estimated mean phase offset can then be used as the input to an estimation algorithm, such as a Kalman filter.

Preferably the method further includes the step of calculating, as the time associated with each estimated mean phase offset, the geometric mean of the times of sending or receipt of the timing messages from which the estimated mean phase offset is derived.

Thus a plurality of composite timing messages can be created which have a phase offset and a time which represents the average of those values as calculated from the pair of least delayed timing messages which have been chosen to create the composite timing message.

In certain embodiments, the estimation of the phase offset includes using the thus-constructed composite timing messages and operating a Kalman filter using the timestamps of said timing messages, and more preferably includes the steps of: initialising the Kalman filter by operating it using the measured timestamps of said timing messages until the estimates of the phase offset and skew are estimated to within a predetermined accuracy; and then repeatedly for each time window: operating the Kalman filter in prediction only mode to estimate the instantaneous phase offset based on the state vector derived from the composite timing messages from the previous time window; generating the composite timing messages for the current time window; and at the end of each time window, updating the Kalman filter with the values from the composite timing messages from the time window just ended, wherein the Kalman filter operates with a measurement equation:

$$\frac{(T_1[n_0] - T_2[n_0]) + (T_4[n_1] - T_3[n_1])}{2} = \theta_E$$

and a state equation:

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n \,,$$

and further wherein, after the step of initialising the Kalman filter:

$T_1[n_0]$, $T_2[n_0]$, $T_3[n_1]$ and $T_4[n_1]$ are, respectively, the time of sending of the least delayed timing message, from which the composite timing message is generated, sent from the server to the client; the time of receipt of said least delayed timing message sent from the server to the client; the time of sending of the least delayed timing message, from which the composite timing message is generated, sent from the client to the server; and the time of receipt of said least delayed timing message sent from the client to the server; $\theta_E$ is the estimated mean phase offset value used by the estimation algorithm; $\theta_n$ and $\alpha_n$ are the offset and skew estimates of the slave clock compared to the master at time $n$ at the output of the estimation algorithm; $\Delta T$ is the time period between the time associated with consecutive estimated mean phase offsets.

In certain embodiments the steps of detecting the least delayed timing messages in each direction include: determining, from said timestamps, a forward displacement factor which is the difference between the interval between the times of receipt of successive first timing messages by the client and the interval between the times of sending of said successive first messages by the server; determining, from said timestamps, a reverse displacement factor which is the difference between the interval between the times of receipt of successive second timing messages by the server and the interval between the times of sending of said successive second timing messages by the client; maintaining a running sum of said forward displacement factors over a predetermined time period; maintaining a running sum of reverse displacement factors over a predetermined time period; and determining the least delayed timing messages from said running sums.

In certain embodiments, the method further includes the step of estimating the variance of the measurement noise for the phase offset estimated for each of the least delayed timing messages. For example, this may be done by comparing the distance between the running sums of displacement factors at the times of the least delayed timing messages.

In certain embodiments the method may include the further steps of determining or estimating the bias or offset between the instantaneous phase offset predicted by the estimation algorithm and the phase offset estimated directly from the least delayed timing messages. A stable estimate of this bias can be obtained by determining the bias from a plurality of least delayed timing messages and averaging them, for example using a exponentially weighted moving average filter.

The method may use this estimated bias in the event that it becomes impossible to obtain timing messages or timestamps in one of the directions, or in the event that timing messages in one direction are subject to significant disruption or delay.

In such situations, the bias may be used to estimate the instantaneous phase offset from the timing messages which are received or which are not subject to disruption or delay.

The calculation of such a bias can also be used as a check on new candidates for least delayed timing messages. For example, if the absolute distance of the phase offset estimated from a candidate least delayed timing message from the predicted phase offset using the bias is above a predetermined threshold then the candidate least delayed timing message can be ignored and not used in future updates.

In certain embodiments the method further includes the step of determining the load conditions on the network between the server and the client and, if the load conditions are determined to be low in a window, storing the composite timing messages determined in said window, whilst, if the load conditions are determined to be high in a window, using stored composite timing messages from an earlier window in the estimation of the phase offset.

In high network load conditions or when there is a change to the routing of traffic, the absolute delay of the least delayed timing messages can increase significantly. This shift in the values of the least delayed timing messages can result in the method of this aspect having difficulty or even being unable to detect/verify the true least delayed timing messages and may therefore result in no composite timing messages being created for use in the estimation process for the phase offset. This can impair the timing synchronisation and cause decline in the accuracy of the synchronization approach.

Preferably these embodiments operate by detecting changes in network load conditions (both increases and decreases in network load) and determining any significant changes. When a significant change in load condition is determined the shift in phase is considered and can be used to modify the attributes associated with the least delayed timing messages.

Preferably the step of determining the load conditions includes the sub-steps of: calculating an estimate of a statistical characteristic of the queuing delay in each of said windows; and comparing the estimate from the window in which the load conditions are being determined with the estimate from one or more previous windows and comparing the differences to a predetermined threshold.

Preferably if the load conditions are determined to be high in a particular window, the stored composite timing messages are used to adjust composite timing messages determined in that window.

Thus the effects of high load conditions on the determination of the least delayed timing messages and their use can be reduced or minimized.

The method of the present aspect may include any combination of some, all or none of the above described preferred and optional features.

The method of the above aspect is preferably implemented by a time client according to the second aspect of this invention, as described below, or a system according to the third aspect of this invention, as described below, but need not be.

Further aspects of the present invention include computer programs for running on computer systems which carry out the method of the above aspect, including some, all or none of the preferred and optional features of that aspect.

A second aspect of the present invention provides a time client having a slave clock and a processor, and connected to a master clock in a server over a network, wherein the time client is arranged to: within a time window of predetermined duration, exchange timing messages with the server and record and receive timestamps which are the times of sending and of receipt of those messages according to the master and slave clocks, and wherein the processor is arranged to: determine, from those timestamps, at least one first timestamp pair, which is the times of sending and receipt associated with the least delayed timing message sent from the server to the client in the window; determine, from those timestamps, at least one second timestamp pair, which is the times of sending and receipt associated with the least delayed timing message sent from the client to the server in the window; generate, from the first and second plurality of timestamps at least one composite timing message, which includes said first timestamp pair and said second timestamp pair; and use said composite timing messages to estimate the phase offset between the master clock and the slave clock.

In certain embodiments, a plurality of timestamp pairs for each of the forward and reverse directions are determined and used. In such embodiments, the processor is arranged to determine timestamp pairs and generate composite timing messages by: determining, from those timestamps, a first plurality of timestamp pairs, each of which are the times of sending and receipt associated with the least delayed timing messages sent from the server to the client in the window; determining, from those timestamps, a second plurality of timestamp pairs, each of which are the times of sending and receipt associated with the least delayed timing messages sent from the client to the server in the window; generating, from the first and second plurality of timestamps a plurality of composite timing messages, each of which includes one of said first plurality of timestamp pairs and one of said second plurality of timestamp pairs.

Preferably the composite timing messages are also used to estimate the skew between the master clock and the salve clock.

The network may be a packet network (using technologies such Ethernet, IP, MPLS, etc.).

The timing messages are preferably timing messages under the IEEE 1588 Precision Time Protocol (PTP).

The time client of this aspect can identify a set of minimally delayed packets (MDPs) or timing messages in the forward and reverse directions within a window of samples. Composites of these MDPs can be created and these composites represent packets or timing messages which would be minimally delayed in both the forward and reverse directions. As these composites are minimally delayed in both directions, their variability, magnitude and the degree of asymmetry are all minimised. These composites are therefore very valuable timing messages to use to update a Kalman filter (or any other) estimation algorithm.

The composite timing messages generated in the time client of this aspect are ideal for updating the estimation algorithm for phase and frequency synchronisation as they are minimally delayed, have lower variance and suffer less asymmetry than any other timing messages in the window of samples from which they were created. Updating the estimation algorithm with better data can improve the accuracy of the estimation process.

The composite timing messages may also include further time information, either derived directly from the timestamps or calculated from the least delayed timing messages from which the composite timing message is generated.

In certain embodiments, when performing said estimation of the phase offset, the processor is further arranged to: operate a Kalman filter using the timestamps of said timing messages, including the steps of: initialising the Kalman filter by operating it using the measured timestamps of said timing messages until the estimates of the phase offset and skew are estimated to within a predetermined accuracy; and then repeatedly for each time window: operating the Kalman filter in prediction only mode to estimate the instantaneous phase offset based on the state vector derived from the composite timing message or messages from the previous time window; generating the composite timing message or messages for the current time window; and at the end of each time window, updating the Kalman filter with the values from the composite timing message or messages from the time window just ended.

In this manner, the Kalman filter can operate only on timing messages which have been identified as being minimally delayed and optimal. As there are a reduced number of these (compared, for example, to operating the estimation on timestamps from every exchange of timing messages), the update can be performed quickly at the end of each window, preferably between the last timing message of the preceding window and the first timing message of the next window.

The initialising step can be accomplished by a number of means, such as, for example, identifying lightly loaded conditions and operating the Kalman filter on each timestamp under such conditions.

Whilst the above embodiments use a Kalman filter, it will be appreciated that similar principles can be applied to other estimation/prediction models such as those described in Bletsas et al. [3].

Preferably the processor is further arranged to: calculate, for each of said least delayed timing messages, an estimate of the phase offset; and calculate, for each of said composite timing messages, an estimated mean phase offset which is the geometric mean of: the phase offset calculated for the timing message associated with said one of said first plurality of timestamps and the phase offset calculated for the timing message associated with said one of said second plurality of timestamps.

The estimated mean phase offset can then be used as the input to an estimation algorithm, such as a Kalman filter.

Preferably the processor is further arranged to calculate, as the time associated with each estimated mean phase offset, the geometric mean of the times of sending or receipt of the timing messages from which the estimated mean phase offset is derived.

Thus a plurality of composite timing messages can be created which have a phase offset and a time which represents the average of those values as calculated for the two least delayed timing messages which have been used to create the composite timing message.

In certain embodiments, when performing said estimation of the phase offset, the processor is further arranged to: operate a Kalman filter using the timestamps of said timing messages, including the steps of: initialising the Kalman filter by operating it using the measured timestamps of said timing messages until the estimates of the phase offset and skew are estimated to within a predetermined accuracy; and then repeatedly for each time window: operating the Kalman filter in prediction only mode to estimate the instantaneous phase offset based on the state vector derived from the composite timing messages from the previous time window; generating the composite timing messages for the current time window; and at the end of each time window, updating the Kalman filter with the values from the composite timing messages from the time window just ended, wherein the Kalman filter operates with a measurement equation:

$$\frac{(T_1[n_0] - T_2[n_0]) + (T_4[n_1] - T_3[n_1])}{2} = \theta_E$$

and a state equation:

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n \, ,$$

and further wherein, after the step of initialising the Kalman filter:

$T_1[n_0]$, $T_2[n_0]$, $T_3[n_1]$ and $T_4[n_1]$ are, respectively, the time of sending of the least delayed timing message, from which the composite timing message is generated, sent from the server to the client; the time of receipt of said least delayed timing message sent from the server to the client; the time of sending of the least delayed timing message, from which the composite timing message is generated, sent from the client to the server; and the time of receipt of said least delayed timing message sent from the client to the server; $\theta_E$ is the estimated mean phase offset value used by the estimation algorithm; $\theta_n$ and $\alpha_n$ are the offset and skew estimates of the slave clock compared to the master at time $n$ at the output of the estimation algorithm; $\Delta T$ is the time period between the time associated with consecutive estimated mean phase offsets.

In certain embodiments, when detecting the least delayed timing messages in each direction, the processor is arranged to: determine, from said timestamps, a forward displacement factor which is the difference between the interval between the times of receipt of successive first timing messages by the client and the interval between the times of sending of said successive first messages by the server; determine, from said timestamps, a reverse displacement factor which is the difference between the interval between the times of receipt of successive second timing messages by the server and the interval between the times of sending of said successive second timing messages by the client; maintain a running sum of said forward displacement factors over a predetermined time period; maintain a running sum of reverse displacement factors over a predetermined time period; and determine the least delayed timing messages from said running sums.

In certain embodiments, the processor is further arranged to estimate the variance of the measurement noise for the phase offset estimated for each of the least delayed timing messages. For example, this may be done by comparing the distance between the running sums of displacement factors at the times of the least delayed timing messages.

In certain embodiments the processor may be further arranged to determine or estimate the bias or offset between the instantaneous phase offset predicted by the estimation algorithm and the phase offset estimated directly from the least delayed timing messages. A stable estimate of this bias can be obtained by determining the bias from a plurality of least delayed timing messages and averaging them, for example using an exponentially weighted moving average filter.

The processor may use this estimated bias in the event that it becomes impossible to obtain timing messages or timestamps in one of the directions, or in the event that timing messages in one direction are subject to significant disruption or delay.

In such situations, the bias may be used to estimate the instantaneous phase offset from the timing messages which are received or which are not subject to disruption or delay.

The calculation of such a bias can also be used as a check on new candidates for least delayed timing messages. For example, if the absolute distance of the phase offset estimated from a candidate least delayed timing message from the predicted phase offset using the bias is above a predetermined threshold then the candidate least delayed timing message can be ignored and not used in future updates.

In certain embodiments, the processor is further arranged to determine the load conditions on the network between the server and the client and, if the load conditions are determined to be low in a window, store the composite timing messages determined in said window in a memory, whilst, if the load conditions are determined to be high in a window, use composite timing messages from an earlier window stored in said memory in the estimation of the phase offset.

In high network load conditions or when there is a change to the routing of traffic, the absolute delay of the least delayed timing messages can increase significantly. This shift in the values of the least delayed timing messages can result in the method of this aspect having difficulty or even being unable to detect/verify the true least delayed timing messages and may therefore result in no composite timing messages being created for use in the estimation process for the phase offset. This can impair the timing synchronisation and cause decline in the accuracy of the synchronization approach.

Preferably these embodiments operate by detecting changes in network load conditions (both increases and decreases in network load) and determining any significant changes. When a significant change in load condition is determined the shift in phase is considered and can be used to modify the attributes associated with the least delayed timing messages.

Preferably, when determining the load conditions, the processor is arranged to: calculate an estimate of a statistical characteristic of the queuing delay in each of said windows; and compare the estimate from the window in which the load conditions are being determined with the estimate from one or more previous windows and comparing the differences to a predetermined threshold.

Preferably, if the load conditions are determined to be high in a window, the processor is arranged to use composite timing messages stored in said memory to adjust composite timing messages determined in that window.

Thus the effects of high load conditions on the determination of the least delayed timing messages and their use can be reduced or minimized.

The time client of the present aspect may include any combination of some, all or none of the above described preferred and optional features.

The processor of the slave device of the above aspect preferably operates by performing a method according to the first aspect of this invention, as described above, but need not do so.

A further aspect of the present invention provides a networked time system having: a time server which has a master clock; a time client having a slave clock and a processor; and a network connecting said server and said client, wherein the server and the client are arranged to, within a time window of predetermined duration, exchange timing messages with each other and record timestamps which are the times of sending and of receipt of those messages according to the master and slave clocks, and wherein the processor in the client is arranged to: determine, from those timestamps, at least one first timestamp pair, which is the times of sending and receipt associated with the least delayed timing message sent from the server to the client in the window; determine, from those timestamps, at least one second timestamp pair, which is the times of sending and receipt associated with the least delayed timing message sent from the client to the server in the window; generate, from the first and second timestamp pairs at least one composite timing message, which includes said first timestamp pair and said second timestamp pair.

In certain embodiments, a plurality of timestamp pairs for each of the forward and reverse directions are determined and used. In such embodiments, the processor is arranged to determine timestamp pairs and generate composite timing messages by: determining, from those timestamps, a first plurality of timestamp pairs, each of which are the times of sending and receipt associated with the least delayed timing messages sent from the server to the client in the window; determining, from those timestamps, a second plurality of timestamp pairs, each of which are the times of sending and receipt associated with the least delayed timing messages sent from the client to the server in the window; generating, from the first and second plurality of timestamps a plurality of composite timing messages, each of which includes one of said first plurality of timestamp pairs and one of said second plurality of timestamp pairs.

Preferably the composite timing messages are also used to estimate the skew between the master clock and the salve clock.

The network may be a packet network (using technologies such Ethernet, IP, MPLS, etc.).

The timing messages are preferably timing messages under the IEEE 1588 Precision Time Protocol (PTP).

The system of this aspect can identify a set of minimally delayed packets (MDPs) or timing messages in the forward and reverse directions within a window of samples. Composites of these MDPs can be created and these composites represent packets or timing messages which would be minimally delayed in both the forward and reverse directions. As these composites are minimally delayed in both directions, their variability, magnitude and the degree of asymmetry are all minimised. These composites are therefore very valuable timing messages to use to update a Kalman filter (or any other) estimation algorithm.

The composite timing messages generated in the system of this aspect are ideal for updating the estimation algorithm for phase synchronisation as they are minimally delayed, have lower variance and suffer less asymmetry than any other timing messages in the window of samples from which they were created. Updating the estimation algorithm with better data can improve the accuracy of the estimation process.

The composite timing messages may also include further time information, either derived directly from the timestamps or calculated from the least delayed timing messages from which the composite timing message is generated.

In certain embodiments, when performing said estimation of the phase offset, the processor is further arranged to: operate a Kalman filter using the timestamps of said timing messages, including the steps of: initialising the Kalman filter by operating it using the measured timestamps of said timing messages until the estimates of the phase offset and skew are estimated to within a predetermined accuracy; and then repeatedly for each time window: operating the Kalman filter in prediction only mode to estimate the instantaneous phase offset based on the state vector derived from the composite timing message or messages from the previous time window; generating the composite timing message or messages for the current time window; and at the end of each time window, updating the Kalman filter with the values from the composite timing message or messages from the time window just ended.

In this manner, the Kalman filter can operate only on timing messages which have been identified as being minimally delayed and optimal. As there are a reduced number of these (compared, for example, to operating the estimation on timestamps from every exchange of timing messages), the update can be performed quickly at the end of each window, preferably between the last timing message of the preceding window and the first timing message of the next window.

The initialising step can be accomplished by a number of means, such as, for example, identifying lightly loaded conditions and operating the Kalman filter on each timestamp under such conditions.

Whilst the above embodiments use a Kalman filter, it will be appreciated that similar principles can be applied to other estimation/prediction models such as those described in Bletsas et al. [3].

Preferably the processor is further arranged to: calculate, for each of said least delayed timing messages, an estimate of the phase offset; and calculate, for each of said composite timing messages, an estimated mean phase offset which is the geometric mean of: the phase offset calculated for the timing message associated with said one of said first plurality of timestamps and the phase offset calculated for the timing message associated with said one of said second plurality of timestamps.

The estimated mean phase offset can then be used as the input to an estimation algorithm, such as a Kalman filter.

Preferably the processor is further arranged to calculate, as the time associated with each estimated mean phase offset, the geometric mean of the times of sending or receipt of the timing messages from which the estimated mean phase offset is derived.

Thus a plurality of composite timing messages can be created which have a phase offset and a time which represents the average of those values as calculated for the two least delayed timing messages which have been used to create the composite timing message.

In certain embodiments, when performing said estimation of the phase offset, the processor is further arranged to: operate a Kalman filter using the timestamps of said timing messages, including the steps of: initialising the Kalman filter by operating it using the measured timestamps of said timing messages until the estimates of the phase offset and skew are estimated to within a predetermined accuracy; and then repeatedly for each time window: operating the Kalman filter in prediction only mode to estimate the instantaneous phase offset based on the state vector derived from the composite timing messages from the previous time window; generating the composite timing messages for the current time window; and at the end of each time window, updating the Kalman filter with the values from the composite timing messages from the time window just ended, wherein the Kalman filter operates with a measurement equation:

$$\frac{(T_1[n_0] - T_2[n_0]) + (T_4[n_1] - T_3[n_1])}{2} = \theta_E$$

and a state equation:

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n,$$

and further wherein, after the step of initialising the Kalman filter:
$T_1[n_0]$, $T_2[n_0]$, $T_3[n_1]$ and $T_4[n_1]$ are, respectively, the time of sending of the least delayed timing message, from which the composite timing message is generated, sent from the server to the client; the time of receipt of said least delayed timing message sent from the server to the client; the time of sending of the least delayed timing message, from which the composite timing message is generated, sent from the client to the server; and the time of receipt of said least delayed timing message sent from the client to the server; $\theta_E$ is the estimated mean phase offset value used by the estimation algorithm; $\theta_n$ and $\alpha_n$ are the offset and skew estimates of the slave clock compared to the master at time $n$ at the output of the estimation algorithm; $\Delta T$ is the time period between the time associated with consecutive estimated mean phase offsets.

In certain embodiments, when detecting the least delayed timing messages in each direction, the processor is arranged to: determine, from said timestamps, a forward displacement factor which is the difference between the interval between the times of receipt of successive first timing messages by the client and the interval between the times of sending of said successive first messages by the server; determine, from said timestamps, a reverse displacement factor which is the difference between the interval between the times of receipt of successive second timing messages by the server and the interval between the times of sending of said successive second timing messages by the client; maintain a running sum of said forward displacement factors over a predetermined time period; maintain a running sum of reverse displacement factors over a predetermined time period; and determine the least delayed timing messages from said running sums.

In certain embodiments, the processor is further arranged to estimate the variance of the measurement noise for the phase offset estimated for each of the least delayed timing messages. For example, this may be done by comparing the distance between the running sums of displacement factors at the times of the least delayed timing messages.

In certain embodiments the processor may be further arranged to determine or estimate the bias or offset between the instantaneous phase offset predicted by the estimation algorithm and the phase offset estimated directly from the least delayed timing messages. A stable estimate of this bias can be obtained by determining the bias from a plurality of least delayed timing messages and averaging them, for example using an exponentially weighted moving average filter.

The processor may use this estimated bias in the event that it becomes impossible to obtain timing messages or timestamps in one of the directions, or in the event that timing messages in one direction are subject to significant disruption or delay.

In such situations, the bias may be used to estimate the instantaneous phase offset from the timing messages which are received or which are not subject to disruption or delay.

The calculation of such a bias can also be used as a check on new candidates for least delayed timing messages. For example, if the absolute distance of the phase offset estimated from a candidate least delayed timing message from the predicted phase offset using the bias is above a predetermined threshold then the candidate least delayed timing message can be ignored and not used in future updates.

In certain embodiments, the processor is further arranged to determine the load conditions on the network between the server and the client and, if the load conditions are determined to be low in a window, store the composite timing messages determined in said window in a memory, whilst, if the load conditions are determined to be high in a window, use composite timing messages from an earlier window stored in said memory in the estimation of the phase offset.

In high network load conditions or when there is a change to the routing of traffic, the absolute delay of the least delayed timing messages can increase significantly. This shift in the values of the least delayed timing messages can result in the method of this aspect having difficulty or even being unable to detect/verify the true least delayed timing messages and may therefore result in no composite timing messages being created for use in the estimation process for the phase offset. This can impair the timing synchronisation and cause decline in the accuracy of the synchronization approach.

Preferably these embodiments operate by detecting changes in network load conditions (both increases and decreases in network load) and determining any significant changes. When a significant change in load condition is determined the shift in phase is considered and can be used to modify the attributes associated with the least delayed timing messages.

Preferably, when determining the load conditions, the processor is arranged to: calculate an estimate of a statistical characteristic of the queuing delay in each of said windows; and compare the estimate from the window in which the load conditions are being determined with the estimate from one or more previous windows and comparing the differences to a predetermined threshold.

Preferably, if the load conditions are determined to be high in a window, the processor is arranged to use composite timing messages stored in said memory to adjust composite timing messages determined in that window.

Thus the effects of high load conditions on the determination of the least delayed timing messages and their use can be reduced or minimized.

The system of the present aspect may include any combination of some, all or none of the above described preferred and optional features.

The processor of the slave device of the above aspect preferably operates by performing a method according to the first aspect of this invention, as described above, but need not do so.

Brief Description of the Drawings

Embodiments of the invention will now be described by way of example with reference to the accompanying drawings in which:

Figure 1 is a graphical representation of the relationship between $\theta_{Ef}$, $\theta_{Er}$ and $\theta_E[n]$, as defined in the embodiments of the invention;

Figure 2 shows the operation of a phase offset estimation process according to an embodiment of the present invention over a plurality of time windows;

Figure 3 is a graphical representation of the relationship between $\theta_{Ef}$, $\theta_{Er}$ and $\theta_E[n]$, as defined in the embodiments of the invention showing the calculations of biases; and

Figure 4 shows the impact of a large change in the network load on the reverse path on the calculation of least delayed timing messages and illustrates how this change can be detected and compensated for in embodiments of the present invention.

Detailed Description

Embodiments of the present invention are developed from an understanding of the critical importance of being able to identify and effectively use MDPs for time and frequency synchronization. The importance of MDP is discussed further in PCT application no. PCT/GB2016/053631 from the present inventors, which was filed on the same day as the present application.

From the discussion in the above application, it can be seen that a Kalman filter implementation uses $\theta_E$ to represent the practical phase offset which can be estimated, and $\theta_T$ to represent the true phase offset. The difference between the estimated phase offset, $\theta_E$, and the true offset, $\theta_T$, is dominated by the difference between the estimated minimum forward queuing delay and the estimated minimum reverse queuing delay (see equations 8, 9, 10 in the above co-pending application for further explanation). Thus if it is possible to find a way to reliably identify the minimum forward delayed timing messages and the minimum reverse delayed timing messages, a very accurate estimate of the true phase offset could be obtained.

However, since the minimum delayed timing messages occur at random times on the forward and reverse paths and because the timestamps $T_1$, $T_2$, $T_3$, $T_4$ (being respectively, the time of sending of a first message from the master to the slave, according to the master clock; the time of receipt of said first message by the slave, according to the slave clock; the time of sending of a second message from the slave to the master, according to the slave clock; and the time of receipt of said second message by the master, according to the master clock) are monotonically increasing, it is difficult to directly identify the timestamps which experience minimum delay.

The phase offset of the slave clock with respect to master clock can be defined as follows:

$$T_1[n] + q_f[n] + d_f = T_2[n] + \theta_T[n] \qquad \text{1a}$$

$$T_4[n] - q_r[n] - d_r = T_3[n] + \theta_T[n] \qquad \text{1b}$$

Where $d_f$ and $d_r$ are the fixed delays on the forward and reverse paths respectively.

Manipulating 1a and 1b together it can be seen that:

$$2\theta_T(n) = (T_1(n) + T_4(n)) - [(T_2(n) + T_3(n)) + (q_f(n) - q_r(n)) + (d_f - d_r)]$$

However, as discussed in [1] as $q_f(n)$, $q_r(n)$, $d_f$ and $d_r$ are unknown, only the phase, $\theta_E(n)$, can be estimated:

$$2\theta_E(n) = (T_1(n) + T_4(n)) - (T_2(n) + T_3(n)) \qquad 2$$

By inspection it is clear that the values of $(q_f[n] + d_f)$ and $-(q_r[n] + d_r)$ both contribute directly to the difference in phase estimate between $2\theta_E(n)$ and $2\theta_T(n)$.

$\theta_{Ef}[n]$ can be defined as the forward instantaneous phase offset *contribution* due to the forward path delay only. Similarly, $\theta_{Er}[n]$, can be defined as the reverse instantaneous phase offset *contribution* due to the reverse path delay only. Thus, from 2, and the definitions above:

$$\theta_{Ef}[n] = T_1[n] - T_2[n] \qquad \text{3a}$$

$$\theta_{Er}[n] = T_4[n] - T_3[n] \qquad \text{3b}$$

These 2 phase offset contributions can be combined to find the overall phase offset estimate, $\theta_E[n]$. Thus $\theta_E[n]$ is:

$$\theta_E[n] = \tfrac{1}{2}\big(\theta_{Ef}[n] + \theta_{Er}[n]\big) \qquad 4$$

as derived from equations 2, 3a and 3b.

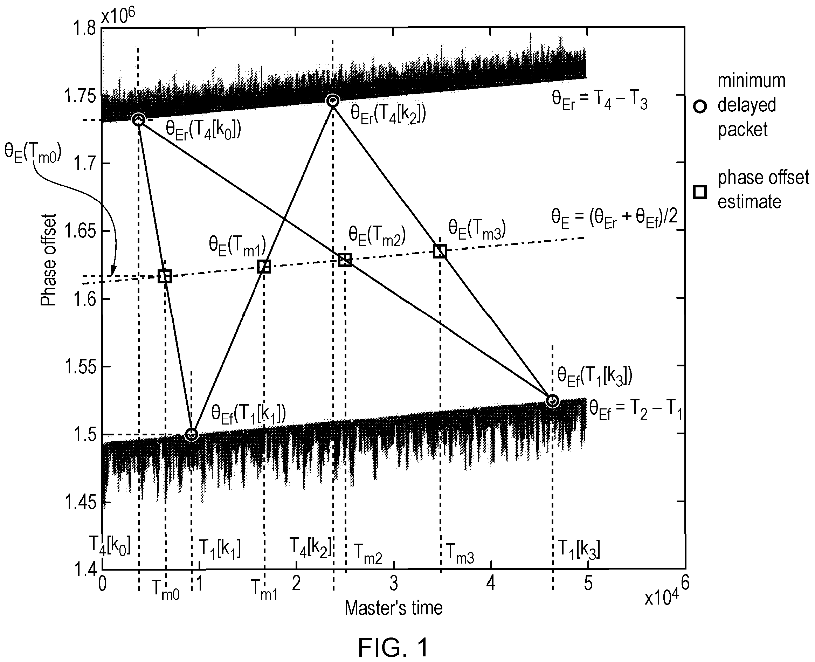

A graphical representation of $\theta_{Ef}$, $\theta_{Er}$ and their relation with $\theta_E[n]$ is illustrated in Figure 1.

In Figure 1, $\theta_{Er}$ and $\theta_{Ef}$ are shown as continuously growing. This growth is caused by the skew (fractional frequency offset) between the master and the slave clocks. Also, it will be noticed that minimally delayed timing messages (for the forward and reverse paths) are distributed randomly along the time axis. These two effects make it impossible to directly use the MDPs from different time instants to compute the instantaneous phase offset, $\theta_E[n]$. This is because equation 2 (and 3a, 3b) assume the timestamps $T_1$, $T_2$, $T_3$, $T_4$ are from the same set of two way message exchanges (and which are assumed to occur within a short time period).

In order to resolve the above problem, an assumption is applied. As the underlying hardware clock is controlled by an OCXO oscillator (or some other oscillator with similar stability), it can be assumed that $\theta_E$ increases linearly over a typical window length of 60 seconds (in direct proportion to the value of the oscillator's skew). The value of the skew, $\alpha[n]$, for each time step within the window can be assumed to be fixed over the 60 second period).

Using the assumption of linearity of the instantaneous phase offset over a short period window, linear combinations of the plurality of estimates of the $\theta_{Ef}$ and $\theta_{Er}$ can be used to create several $\theta_E$ estimations. These generated $\theta_E$ values (Figure 1) are the ones least impacted by queuing delay on both the forward and reverse paths within the window. For clarity note that each $\theta_E$ value is not based on real timestamps but instead it, and its associated time sample, are both derived from one real forward and reverse MDP message exchanges separated in time. This combination of forward and reverse message data from different message exchanges is only valid because of the assumed linearity of the phase offset. These composite $\theta_E$ values are the most minimally impacted by queuing delays and are thus highly valuable drivers of the updates of the Kalman filter phase and skew estimates.

The phase offset estimation process operates as follows:

1. The incoming timestamps $T_1(n)$, $T_2(n)$, $T_3(n)$ and $T_4(n)$ are processed in nonoverlapping windows, where the typical window size is 60 seconds.

2. During the initialization phase, the Kalman filter ("KF") is operated to ensure it has converged and has accurate estimates of the phase offset and skew. This can be achieved using any known approach. A further approach is described in the co-pending application identified above which involves identifying lightly loaded conditions and operating the Kalman filter on each timestamp to yield stable and accurate estimates of skew and phase offset. Following the initialization phase the Kalman filter then operates as described in the following steps.

3. The Kalman filter is operated in prediction only mode based on the latest parameters derived from the measurement data from the previous window (see step 9). (In prediction only mode no measurement driven updates occur and the state estimates from the previous time step create an estimate of the state at the current time step.)

4. In the current window, calculate the values of $(T_1(n) - T_2(n))$, and $(T_4(n) - T_3(n))$ for each value of n in the window.

5. Identify one (or more) largest value of $T_1(n) - T_2(n)$ (see Figure 1 from which it can be seen that the maximum value of $\theta_{Ef}$ corresponds to the minimum delayed forward timing messages. Note: that the $(T_1(n) - T_2(n))$ values are negative and hence the highest absolute values corresponds to the minimally delayed timing messages). In the subsequent description of this step and the following steps it is assumed that more than one largest value is processed.

Store the values and the time samples where they occur. As per Figure 1, the values are designated $\theta_{Ef}(T_1[k_1])$ and $\theta_{Ef}(T_1[k_3])$ which occur at time samples $T_1[k_1]$ and $T_1[k_3]$ respectively. Note that the $T_1$ timestamps from the Master clock are used to identify the time samples at which the two largest values occur.

6. Identify one (or more) smallest value of $T_4(n)-T_3(n)$. Store the values and the time samples where they occur. As per Figure 1, the values are designated $\theta_{Er}(T_4[k_0])$ and $\theta_{Er}(T_4[k_2])$ which occur at time samples, $T_4[k_0]$ and $T_4[k_2]$ respectively. Note again that the timestamps from the Master clock are used to identify the samples at which the two smallest values occur but in this case $T_4$ timestamps are used.

7. As Figure 1 illustrates, all possible phase estimates are calculated as the geometrical mean of the values $\theta_{Er}$ and $\theta_{Ef}$, that is for $\theta_{Er}(T_4[k_0])$ and $\theta_{Ef}(T_1[k_1])$ the geometrical mean

$$\theta_E \text{ is } \theta_E(T_{m0}) = (\theta_{Ef}(T_1[k_1]) + \theta_{Er}(T_4[k_0]))/2.$$

The other geometrical mean values in the window are calculated as:

$$\theta_E(T_{m1}) = (\theta_{Ef}(T_1[k_1]) + \theta_{Er}(T_4[k_2]))/2$$

$$\theta_E(T_{m2}) = (\theta_{Ef}(T_1[k_3]) + \theta_{Er}(T_4[k_0]))/2$$

$$\theta_E(T_{m3}) = (\theta_{Ef}(T_1[k_3]) + \theta_{Er}(T_4[k_2]))/2$$

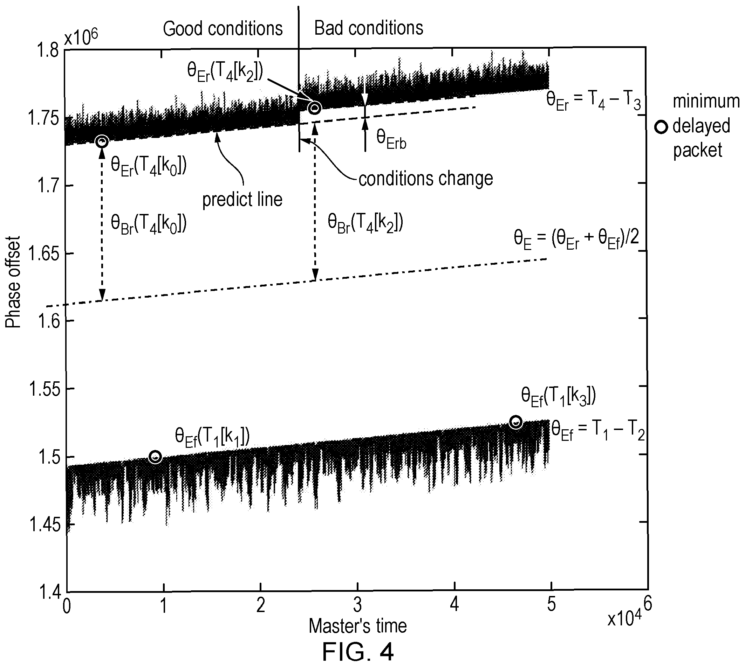

As there are 4 minimally delayed timing messages identified in the window illustrated in Figure 1, 4 geometrical mean values are calculated. If there were more minimally delayed timing messages identified, more geometrical means would be calculated. Note that the above $\theta_E(T_{m0})$, ..., $\theta_E(T_{m3})$ are basically the instantaneous phase offset measurements required for the update of the KF as further described in step 9.

8. The time samples at which these geometrical mean values occur are identified as the mid-point between the time samples at which the minimum values occur. Thus for the geometrical mean of $\theta_{Er}(T_4[k_0])$ and $\theta_{Ef}(T_1[k_1])$, the time mid-point is calculated as:

$$T_{m0} = (T_1[k_1] + T_4[k_0])/2.$$

Similarly, for other mid-points:

$$T_{m1} = (T_1[k_1] + T_4[k_2])/2.$$

$$T_{m2} = (T_1[k_3] + T_4[k_0])/2.$$

$$T_{m3} = (T_1[k_3] + T_4[k_2])/2.$$

9. The general form of the Kalman filter measurement equation is given by:

$$(T_1[n]-T_2[n] + T_4[n] - T_3[n])/2 = \theta[n] + v[n]$$

and the Kalman filter state equation is:

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n,$$

The estimated phase values, $\theta_E(T_{m0})$, $\theta_E(T_{m1})$, $\theta_E(T_{m2})$ and $\theta_E(T_{m3})$ are considered to be the optimal estimates of instantaneous phase offset at these time instances (because they are derived from the MDPs). Now the Kalman filter is updated as follows:

a. Compute $\Delta T$ for the current measurement.
The appropriate value of $\Delta T$ to use for the calculated geometrical means depends on which time sample the update phase is occurring at. That is $\Delta T_{m1} = T_{m1} - T_{m0}$ ($\Delta T_{m2} = T_{m2} - T_{m1}$, etc.) and for $\Delta T_{m0}$ it is the time period between $T_{m0}$ and the $T_{mN}$, from the previous window, where $T_{mN}$ was the last time sample at which the geometrical mean was identified. If there were 4 minimally delayed timing messages identified in the previous window, then $T_{mN}$ would be $T_{m3}$ from the previous window.
b. Predict KF states using previously computed $\Delta T_{mx}$ and update these predictions with the corresponding measurement $\theta_E(T_{mx})$, where the $y[n]$ for the measurement is (with respect to step 9 and equations 3a, 3b) as follows:

$$y[n] = \theta_E(T_{mx}) = \theta[n] + v[n]$$

Thus we observe that the usual timestamp based measurement value for the Kalman filter update phase is replaced with the calculated value, $\theta_E(T_{mx})$. The exact measurement noise, $v[n]$, is replaced with the estimated noise, $R[n]$. $R[n]$ is defined in the section below. The steps 9a. and 9b. are repeated for all mid-points $T_{mx}$ and related $\theta_E$ values.

**Detection of the MDPs.**

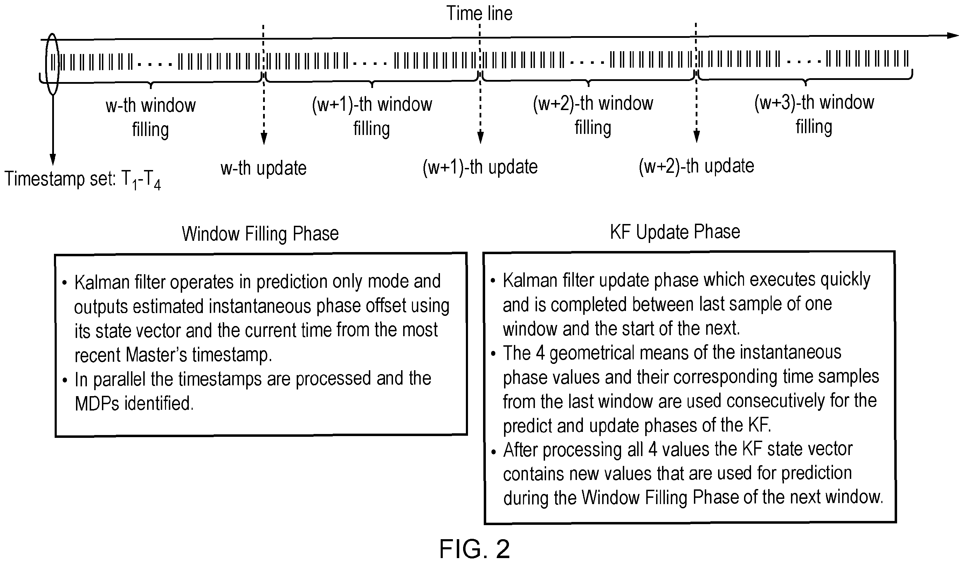

The single most important thing in the process of selection of the optimal packets or timing messages for instantaneous phase offset estimation is to be able to identify MDPs. It is clear that it is difficult to identify MDPs using $\theta_{Ef}$, $\theta_{Er}$, when the oscillator's skew is present. As shown in Figure 1, both quantities ($\theta_{Ef}$, $\theta_{Er}$) are monotonically increasing due to skew. However, it is possible to use the output of the cumulative sums (for example as discussed in the co-pending application referred to above) to easily identify the first three MDPs (or any other arbitrary number) for both forward and backward paths.
As the output of the cumulative sum is no longer monotonically increasing, but rather a very slowly drifting quantity (this drift is much slower than the aforementioned length of the window in which we are tracking MDPs), the delays of the timing messages can be easily directly tracked and compared and hence sorted quite effectively. The output of this sorting process after the Window Filling Phase has finished (see Figure 2) would yield the following values: $D_{fsumsort}[0]$, $D_{fsumsort}[1]$; $D_{rsumsort}[0]$, $D_{rsumsort}[1]$ and their corresponding $\theta_{Ef}$, $\theta_{Er}$ and $T_{m0}$ to $T_{m3}$ values as depicted in Figure 1. Two further minimal values are also identified, i.e., $D_{fsumsort}[2]$ and $D_{rsumsort}[2]$. Note that the value indexed as zero is the minimum, and the values are sorted in the ascending magnitude order.
The sorted $D_{fsumsort}$ and $D_{rsumsort}$ values can be further used for noise variance estimation as described below. The $D_{fsumsort}[2]$ and $D_{rsumsort}[2]$ values are identified exclusively for the noise variance estimation discussed further below.

**Measurement noise variance estimation for MDP derived instantaneous phase offset measurements.**

The measurement noise variance helps the KF to converge properly to a stable estimate of the state values. Therefore, it is important to provide the KF with the estimate of the measurement noise of the instantaneous phase offset derived from MDPs as described above. Clearly, the higher the background traffic, the lower the probability of a "true" MDP being found, and the more variability in its absolute value. This fact has to be observable from the sorted cumulative sum values, as they reflect the packet delays directly. To estimate the variance of the discovered MDPs, we can simply use the distance between the first and the third sample from the sorted cumulative sum as follows:

$$R_{fmin}[w] = EWMA\left\{ \left( D_{fsumsort}[2] - D_{fsumsort}[0] \right)^2 \right\} \qquad 5a$$

$$R_{rmin}[w] = EWMA\{(D_{rsumsort}[2] - D_{rsumsort}[0])^2\} \qquad \text{5b}$$

where w is the window's index, and EWMA is the filtering factor with time constant $\tau$ which can typically be set to 60. The logic behind equations 5a and 5b above is simple. With increasing background traffic load, there is more variation in between the observed minimum packet delays, i.e., the distance between the first and third found MDP is bigger, which in turn, increases the estimate of the measurement noise variance from 5a, 5b as required.

**One way estimation of the instantaneous phase offset**

There may be situations in reality during which one-way mode operation may be required. For example, it may happen that only either Sync or DelayReq messages are received (forward direction or reverse direction timing messages), or that identified MDPs are too distant from the "true" minimally delayed timing message (see discussion regarding the validity of the MDPs below). In such conditions the following approach may be used. This algorithm is divided to two phases: training and prediction phase.

**a) Training phase**

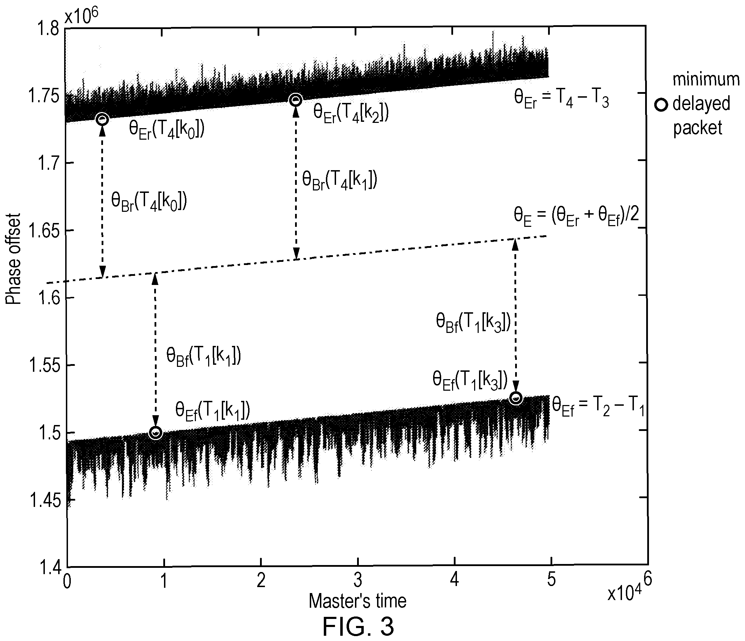

During normal two way mode operation, the following technique can be used to find a bias (or offset) $\theta_{Bf}$, $\theta_{Br}$ between the instantaneous phase offset $\theta$ predicted by the KF and $\theta_{Ef}$, $\theta_{Er}$ derived from MDPs as depicted in Figure 3.
This bias can be found using the following equations:

$$\theta_{Bf}(T_M) = \{\theta_{Ef}(T_M) - (\theta_{Mlast} + \alpha_{Mlast} \cdot (T_M - T_{Mlast}))\} \qquad \text{6a}$$

$$\theta_{Br}(T_M) = \{\theta_{Er}(T_M) - (\theta_{Mlast} + \alpha_{Mlast} \cdot (T_M - T_{Mlast}))\} \qquad \text{6b}$$

where $T_M$ is the time instant of the MDPs measured on the master time scale (i.e. $T_1$ or $T_4$ time stamp as per Figure 3), $\theta_{Mlast}$ and $\alpha_{Mlast}$ are the states of the KF after the last update, and $T_{Mlast}$ is the time at which the last KF's update happened (see 1.a in the above text).
In order to get more stable bias estimates, the values of the bias derived using 6a, 6b can be smoothed by an EWMA filter as illustrated below:

$$\theta_{Bfs} = EWMA\{\theta_{Bf}(T_M)\} = EWMA\{\theta_{Ef}(T_M) - (\theta_{Mlast} + \alpha_{Mlast} \cdot (T_M - T_{Mlast}))\} \qquad \text{7a}$$

$$\theta_{Brs} = EWMA\{\theta_{Br}(T_M)\} = EWMA\{\theta_{Er}(T_M) - (\theta_{Mlast} + \alpha_{Mlast} \cdot (T_M - T_{Mlast}))\} \qquad \text{7b}$$

**b) Prediction phase**

In case only one-way messages are obtained (i.e. $T_1$, $T_2$ or $T_3$, $T_4$), the algorithm enters a prediction phase. In the prediction phase, the trained biases $\theta_{Bfs}$, $\theta_{Brs}$ are used to find the instantaneous phase offset as follows:

$$\theta_E(T_M) = \theta_{Ef}(T_M) - \theta_{Bfs} \qquad \text{8a}$$

$$\theta_E(T_M) = \theta_{Er}(T_M) - \theta_{Brs} \qquad \text{8b}$$

The output of 8a is used to update the KF as in the above algorithm flow (see, Steps 9a and 9b) when there is no valid reverse MDPs available in the window. Similarly 8b is used when there is no valid forward MDPs available in the window.

**MDPs validity verification**

After convergence of the KF and during the normal two-way mode operation when $\theta_{Bfs}$, $\theta_{Brs}$ are already trained (as explained above), the measured bias can be used to invalidate MDPs that are not the "true" MDPs. Due to the stability of the KF estimates, and given the assumption that true MDPs do not vary too much in time, if the absolute distance of the current MDP from the KF predicted $\theta_E$ (using equations 6a, 6b) is above a threshold (typical values for this threshold can be between 500ns and 1μs), it can be safely assumed that the "true" MDP was not obtained in that window and thus these MDP samples can be ignored, i.e., the Kalman filter is not updated using these samples.

**Operation in extreme conditions**

One possible limitation of the phase offset estimation based on optimal timing messages method of the above embodiments is a noticeable increase in the delay of the Minimally Delayed Packets (MDPs) or timing messages during extreme conditions (e.g. 50% load over more than 10 enterprise switches). This increase in the absolute delays of the MDPs can lead to a failure in the system to identify the MDPs because the MDP detection algorithm does not consider timing messages as candidate MDPs if their absolute delay is greater than a threshold. Thus when no MDPs are identified, the system may enter a holdover mode, however, this change of state to the holdover mode is premature.

A further embodiment of the present invention provides an algorithm that compensates for the shift of the absolute delay that enables MDPs to be identified even in high network load conditions. This algorithm improves the robustness of the overall system by avoiding premature changes to the holdover state.

There are two challenges to be overcome:

1. Reliable detection of a dynamic change in the load conditions.

2. Estimation of the phase shift due to the increase in the absolute delay of the MDPs.

**Dynamic load change detection**

In order to detect changes in the traffic load reliably a variable which exhibits very distinct values for different traffic load conditions and has low variance during stable conditions is required.

The previous embodiments of this invention showed that MDPs could be identified using estimates of the queuing delays ($D_{fsum}$, $D_{rsum}$) in a long window of samples (over a minute). For the present embodiment, it is assumed that traffic conditions do not change significantly over a short period of time, that is, not faster than approximately every five minutes. This allows the detection algorithm to identify the change and settle to a new steady state level.

Building on the above embodiments, advantage can be taken of the long window (about 60 seconds of data) to compute a very stable estimate of the statistical characteristic (mean/median/mode) of the queuing delay. Preference is given to the sample mean (average), as it can be computed iteratively as follows:

$$\bar{X} = \frac{1}{N} \sum_{i=0}^{N-1} x[i] \qquad\qquad 9$$

where $x$ is either $D_{fsum}$ or $D_{rsum}$. Since we are computing the characteristics over many samples, the resulting stability of the statistical parameter is greatly improved. For a simple sample mean (noted $\bar{X}$) its variance over N samples is:

$$\sigma_{\bar{X}}^{2} = Var\{\bar{X}\} = \frac{\sigma_{X}^{2}}{N} \qquad\qquad 10$$

where $\sigma_X$ is the sample variance. For example, if the queuing delay has sample variance of 400μs, the variance of the sample mean over a window of 60 seconds with sampling rate of 128 messages per second is

$$\sigma_{\bar{X}}^{2} = \frac{400\mu s}{128 \cdot 60} = 52ns$$

Regardless of the sample variance, the reduction factor is higher for longer windows and higher sampling rates. In the above example the reduction factor is more than 7600 (128*60). Given that the extreme changes in the traffic load would result in the average queuing delays shifting by more than tens of microseconds, a simple average over a window as described above gives an excellent indication of condition changes.

To flag changes of note in a variable over time a threshold is required to indicate that a significant change has occurred, i.e., the difference between the old value and the new value of the average queuing delay is compared to a threshold; if the threshold is exceeded a change in load condition is flagged. A suitable value for the threshold in the present embodiment is approximately $4\mu$s. The threshold selection will depend on a number of factors, such as network setup (number of switches), device switching speed and network transmission speed (0.1/1/10Gbits). The thresholding algorithm should ideally be trained during stable conditions. For example, this might cover 3 measurement windows (typically $3 \times 60$ seconds). From these measurement windows, the threshold could be computed as a simple mean of the averages discussed above for those windows plus an allowance for variance (e.g. 2 or 3 sigma = std. dev.) of those averages.

The comparison can be implemented using consecutive windows directly, or by filtering the average values from the previous windows using an EWMA filter. The filtered result is compared to the new average delay. The comparison also indicates, by the sign of the result, whether the change was to a less heavily loaded or more heavily loaded condition (which will be reflected in a decrease/increase in the average delay value respectively).

Since the $D_{fsum}$ ($D_{rsum}$) computation is based on the sum of estimated values (resulting in Wiener drift), it is impossible to compare windows which are separated significantly in time, unless compensation for the Wiener drift is implemented. As an example of the Wiener drift, let us consider two windows of 60 seconds duration, one indexed $L$ and the other indexed ($L$-60). The two windows would be separated by an hour time difference. Based on the precision of the skew used for computation of the $D_{fsum}$ ($D_{rsum}$), this may yield a significant bias for sample average values in the $L$ and ($L$-60) windows making a direct comparison impossible. One approach to compensation of the Wiener drift is to normalize the computed sample average delay by subtracting the minimum delay, because both the average delay and the minimum delay will experience the same impact from Wiener drift, thus:

$$\bar{X}_{norm} = \left(\frac{1}{N} \sum_{i=0}^{N-1} x[i]\right) - x_{min} \qquad\qquad 11$$

where $x$ is either $D_{fsum}$ or $D_{rsum}$ and $x_{min}$ is the minimum $x$ in the window (MDP). $\bar{X}_{norm}$ is the normalized sample mean delay and it can be used to compare and contrast even very distant windows for other purposes like network traffic monitoring etc.

**Phase offset shift estimation**

The minimum packet delay through a number of switches may change slightly when a higher traffic load is applied, or, it will change significantly when the number of switches changes (rerouting of the PTP traffic path). In such cases the change in the minimum delay will cause a shift in the phase offset estimation, which will, in turn, produce an increased timing error at the slave clock output.

Specifically in relation to the embodiments described above, a significant shift in the minimum delay might result in the algorithm being unable to detect/verify the MDPs and therefore no MDPs would be available to the estimation process. The algorithm described below compensates for the significant changes of the MDPs that are triggered by dynamic changes in the network (large traffic load change or a change to the number of switches).

First, it is assumed that the algorithm described in the previous section is used to detect the dynamic changes in the traffic load conditions. It is also assumed that during good conditions the instantaneous phase offsets in the forward direction plus the instantaneous phase offsets in the reverse direction are stored. Thus, during good conditions the MDPs and the associated instantaneous phase offsets are identified (for example using the above embodiments), and their values stored.

Below the algorithm is described in relation to reverse direction timing messages only, but it will be readily appreciated that the same principles can be applied to the forward direction timing messages.

As illustrated in Figure 4, during good conditions the instantaneous offset $\theta_{Er}(T_4[k_0])$ corresponding to the identified MDP is stored. The value of the phase offset, $\theta_{Er}(T_4[k_2])$, at time instant $T_4[k_2]$, is driven by both the skew and the increase in the reverse packet delay over the time period $T_4[k_0]$ to $T_4[k_2]$.

The expected phase offset at $T_4[k_2]$ due to the impact of skew alone can be derived from the following:

$$\Delta\theta = \alpha \cdot \Delta\mathrm{T}$$

where $\Delta\theta$ is the phase change due to the skew, $\alpha$ over the time interval $\Delta T$. Note that it is assumed that the skew is constant over this period. Using this formula, the expected value, $\theta_{Ers}(T_4[k_2])$ of the phase offset at $T_4[k_2]$ due to the impact of skew only can be calculated as follows:

$$\theta_{Ers}(T_4[k_0]) = \theta_{Er}(T_4[k_0]) + \alpha \cdot (T_4[k_2] - T_4[k_0]) \qquad 12$$

The skew value $\alpha$ is provided by the Kalman filter as described in the above embodiments and is assumed to be constant over the time period of interest due to the high stability of the system's oscillator and the efficacy of the Kalman filter.

Now it is possible to independently consider how the phase offset has been impacted by the change in network load from $T_4[k_0]$ to $T4[k_2]$. From Figure 4 it can be seen that the MDP at $T_4[k_2]$ is distinctly different from what its expected value would be due to skew alone. This shift in phase value $\theta_{Erb}$ (see Figure 4) is caused by the increased reverse packet delay at $T_4[k_2]$. $\theta_{Erb}$ is calculated as:

$$\theta_{Erb} = \theta_{Ers}(T_4[k_2]) - \theta_{Er}(T_4[k_2]) \qquad 13$$

Substituting equation 12 into 13 gives:

$$\theta_{Erb} = \theta_{Er}(T_4[k_0]) + \alpha(T_4[k_2] - T_4[k_0]) - \theta_{Er}(T_4[k_2]) \qquad 14$$

When a change in load condition is flagged, the value of $\theta_{Erb}$ is calculated and compared to a threshold. If $\theta_{Erb}$ is greater than the threshold (typically set at 250ns), a phase shift due a change in the variance of MDPs from one window to the next is considered to have occurred. If $\theta_{Erb}$ is less than the threshold, then no significant shift in phase offset, due to a change to the MDP variance, is indicated and the value of $\theta_{Erb}$ is set to zero.

To address the phase offset caused by the increase in the minimum packet delay, compensated phase offsets at the identified MDPs positions are computed as follows:

$$\theta_{Erc}(T_4) = \theta_{Er}(T_4) + \theta_{Erb} \qquad 15$$

where $\theta_{Erc}(T_4)$ is the corrected phase offset estimate which will be used to update the Kalman filter as described in the above embodiments.

The compensation mechanism of equation 15 continues to operate whilst the network load condition remains in a steady state.

The compensation mechanism will not be invoked in a subsequent window if a change to a lightly loaded network condition is indicated. If a lightly loaded network condition is indicated, $\theta_{Erb}$ is set to zero.

**Compensation of the residual shift**

It will be observed that even though the slight changes in the absolute delay of the MDPs can be compensated for by the above method, some residual shift is sometimes present. The following method helps to further diminish any outstanding error caused by the phase shifts.

The method described below assumes that the skew estimated by the KF is very accurate (based on observations, this can be, on average, better than $1e^{-10}$ second per second) within the time period of at least 10 minutes. This is indeed true for high quality oscillators (OCXO) for the range of traffic load conditions laid out in the ITU-T G.8261 standard.

During good conditions (indicated by the algorithm described above) the last estimated instantaneous phase offset value along with its time index, i.e., $\theta_E(T_m)$ is stored. When bad conditions are detected and the phase shift has been estimated and compensated for, the system is allowed to continue to operate for approximately another 10 minutes using the estimated and corrected phase values (Equation 15) as inputs to the KF. After 10 minutes (time index $T_{m+10}$) the residual phase shift can be measured as follows:

$$\theta_{Eres} = \theta_E(T_m) + \alpha(T_{m+10} - T_m) - \theta_E(T_{m+10}) \qquad 16$$

where $\theta_{Eres}$ is the residual phase shift and $\theta_E(T_{m+10})$ is the instantaneous phase offset estimated using KF at time instant $T_{m+10}$. This residual phase shift is then used as follows to give the final server's time estimate $\theta_{Efinal}$:

$$\theta_{Efinal}(T) = \theta_E(T) + \theta_{Eres} \qquad\qquad 17$$

where $\theta_E(T)$ is the KF's predicted value of the instantaneous phase offset at time instant $T$.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media. Accordingly, the exemplary embodiments of the invention set forth above are considered to be illustrative and not limiting. Various changes to the described embodiments may be made without departing from the scope of the invention as defined in the appended claims.

In particular, although the methods of the above embodiments have been described as being implemented on the systems of the embodiments described, the methods and systems of the present invention need not be implemented in conjunction with each other, but can be implemented on alternative systems or using alternative methods respectively.

## References

1. US 9,184,861 Aweya et al. - Method and devices for compensating for path asymmetry.
2. US 9,112,628 Aweya et al. - Method and devices for synchronization.
3. A. Bletsas: "Evaluation of Kalman filtering for network time keeping," IEEE Trans. on Ultrason., Ferroel., and Freq. Control, 09/2005.
4. Co-pending PCT application no. PCT/GB2016/053631

## Claims

1.    A method of estimating the phase offset between a master clock of a server and a slave clock of a client, the server and the client being in communication over a network,
the method including the steps of:

within a time window of predetermined duration, exchanging timing messages between the server and the client and recording timestamps which are the times of sending and of receipt of those messages according to the master and slave clocks;
determining, from those timestamps, a first plurality of timestamp pairs, which are the times of sending and receipt associated with the least delayed timing messages sent from the server to the client in the window;
determining, from those timestamps, a second plurality of timestamp pairs, which are the times of sending and receipt associated with the least delayed timing messages sent from the client to the server in the window;
generating, from the first and second plurality of timestamp pairs a plurality of composite timing messages, each of which includes one of said first plurality of timestamp pairs and one of said second plurality of timestamp pairs;
using said plurality of composite timing messages to estimate the phase offset between the master clock and the slave clock.

2. A method according to claim 1 wherein said estimation of the phase offset includes operating a Kalman filter using the timestamps of said timing messages, and includes the steps of:

initialising the Kalman filter by operating it using the measured timestamps of said timing messages until the estimates of the phase offset and skew are estimated to within a predetermined accuracy; and then repeatedly for each time window:

operating the Kalman filter in prediction only mode to estimate the instantaneous phase offset based on the state vector derived from the composite timing messages from the previous time window; generating the composite timing messages for the current time window; and at the end of each time window, updating the Kalman filter with the values from the composite timing messages from the time window just ended.

3. A method according to claim 1 or claim 2 further including the steps of:

calculating, for each of said least delayed timing messages, an estimate of the phase offset; and calculating, for each of said composite timing messages, an estimated mean phase offset which is the geometric mean of: the phase offset calculated for the timing message associated with said one of said first plurality of timestamps and the phase offset calculated for the timing message associated with said one of said second plurality of timestamps.

4. A method according to claim 3, further including the step of calculating, as the time associated with each estimated mean phase offset, the geometric mean of the times of sending or receipt of the timing messages from which the estimated mean phase offset is derived.

5. A method according to claim 4 wherein said estimation of the phase offset includes operating a Kalman filter using the timestamps of said timing messages, and includes the steps of:

initialising the Kalman filter by operating it using the measured timestamps of said timing messages until the estimates of the phase offset and skew are estimated to within a predetermined accuracy; and then repeatedly for each time window:

operating the Kalman filter in prediction only mode to estimate the instantaneous phase offset based on the state vector derived from the composite timing messages from the previous time window; generating the composite timing messages for the current time window; and at the end of each time window, updating the Kalman filter with the values from the composite timing messages from the time window just ended,

wherein the Kalman filter operates with a measurement equation:

$$\frac{(T_1[n_0] - T_2[n_0]) + (T_4[n_1] - T_3[n_1])}{2} = \theta_E$$

and a state equation:

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n,$$

and further wherein, after the step of initialising the Kalman filter:

$T_1[n_0]$, $T_2[n_0]$, $T_3[n_1]$ and $T_4[n_1]$ are, respectively, the time of sending of the least delayed timing message, from which the composite timing message is generated, sent from the server to the client; the time of receipt of said least delayed timing message sent from the server to the client; the time of sending of the least delayed timing message, from which the composite timing message is generated, sent from the client to the server; and the time of receipt of said least delayed timing message sent from the client to the server; $\theta_E$ is the estimated mean phase offset value used by the estimation algorithm;

$\theta_n$ and $\alpha_n$ are the offset and skew estimates of the slave clock compared to the master at time $n$ at the output of the estimation algorithm;

$\Delta T$ is the time period between the time associated with consecutive estimated mean phase offsets.

6. A method according to any one of claims 1 to 5, further including the step of determining the load conditions on the network between the server and the client and, if the load conditions are determined to be low in a window, storing the composite timing messages determined in said window, whilst, if the load conditions are determined to be high in a window, using stored composite timing messages from an earlier window in the estimation of the phase offset.

7. A method according to claim 6, wherein the step of determining the load conditions includes the sub-steps of:

calculating an estimate of a statistical characteristic of the queuing delay in each of said windows; and comparing the estimate from the window in which the load conditions are being determined with the estimate from one or more previous windows and comparing the differences to a predetermined threshold.

8. A method according to claim 6 or claim 7, wherein if the load conditions are determined to be high in a window, the stored composite timing messages are used to adjust composite timing messages determined in that window.

9. A time client having a slave clock and a processor, and connected to a master clock of a server over a network, wherein the time client is arranged to:

within a time window of predetermined duration, exchange timing messages with the server and record and receive timestamps which are the times of sending and of receipt of those messages according to the master and slave clocks,
and wherein the processor is arranged to:

determine, from those timestamps, a first plurality of timestamp pairs, which are the times of sending and receipt associated with the least delayed timing messages sent from the server to the client in the window; determine, from those timestamps, a second plurality of timestamp pairs, which are the times of sending and receipt associated with the least delayed timing messages sent from the client to the server in the window; generate, from the first and second plurality of timestamp pairs, a plurality of composite timing messages, each of which includes one of said first plurality of timestamp pairs and one of said second plurality of timestamp pairs; and
use said plurality of composite timing messages to estimate the phase offset between the master clock and the slave clock.

10. A time client according to claim 9 wherein, when performing said estimation of the phase offset, the processor is further arranged to:
operate a Kalman filter using the timestamps of said timing messages, including the steps of:

initialising the Kalman filter by operating it using the measured timestamps of said timing messages until the estimates of the phase offset and skew are estimated to within a predetermined accuracy; and then repeatedly for each time window:

operating the Kalman filter in prediction only mode to estimate the instantaneous phase offset based on the state vector derived from the composite timing messages from the previous time window; generating the composite timing messages for the current time window; and at the end of each time window, updating the Kalman filter with the values from the composite timing messages from the time window just ended.

11. A time client according to claim 9 or claim 10 wherein the processor is further arranged to:

calculate, for each of said least delayed timing messages, an estimate of the phase offset; and calculate, for each of said composite timing messages, an estimated mean phase offset which is the geometric mean of: the phase offset calculated for the timing message associated with said one of said first plurality of timestamps and the phase offset calculated for the timing message associated with said one of said second plurality of timestamps.

21

12. A time client according to claim 11, wherein the processor is further arranged to calculate, as the time associated with each estimated mean phase offset, the geometric mean of the times of sending or receipt of the timing messages from which the estimated mean phase offset is derived.

13. A time client according to claim 12 wherein, when performing said estimation of the phase offset, the processor is further arranged to:
operate a Kalman filter using the timestamps of said timing messages, including the steps of:

initialising the Kalman filter by operating it using the measured timestamps of said timing messages until the estimates of the phase offset and skew are estimated to within a predetermined accuracy; and then repeatedly for each time window:

operating the Kalman filter in prediction only mode to estimate the instantaneous phase offset based on the state vector derived from the composite timing messages from the previous time window; generating the composite timing messages for the current time window; and at the end of each time window, updating the Kalman filter with the values from the composite timing messages from the time window just ended,

$$\frac{(T_1[n_0] - T_2[n_0]) + (T_4[n_1] - T_3[n_1])}{2} = \theta_E$$

and a state equation:

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n,$$

and further wherein, after the step of initialising the Kalman filter:

$T_1[n_0]$, $T_2[n_0]$, $T_3[n_1]$ and $T_4[n_1]$ are, respectively, the time of sending of the least delayed timing message, from which the composite timing message is generated, sent from the server to the client; the time of receipt of said least delayed timing message sent from the server to the client; the time of sending of the least delayed timing message, from which the composite timing message is generated, sent from the client to the server; and the time of receipt of said least delayed timing message sent from the client to the server; $\theta_E$ is the estimated mean phase offset value used by the estimation algorithm; $\theta_n$ and $\alpha_n$ are the offset and skew estimates of the slave clock compared to the master at time $n$ at the output of the estimation algorithm; $\Delta T$ is the time period between the time associated with consecutive estimated mean phase offsets.

14. A time client according to any one of claims 9 to 13, wherein the processor is further arranged to determine the load conditions on the network between the server and the client and, if the load conditions are determined to be low in a window, store the composite timing messages determined in said window in a memory, whilst, if the load conditions are determined to be high in a window, use composite timing messages from an earlier window stored in said memory in the estimation of the phase offset.

15. A networked time system having:

a time server which has a master clock;
a time client having a slave clock and a processor; and
a network connecting said server and said client,
wherein the server and the client are arranged to, within a time window of predetermined duration, exchange timing messages with each other and record timestamps which are the times of sending and of receipt of those messages according to the master and slave clocks,
and wherein the processor in the client is arranged to:

determine, from those timestamps, a first plurality of timestamp pairs, which are the times of sending and receipt associated with the least delayed timing messages sent from the server to the client in the window;

determine, from those timestamps, a second plurality of timestamp pairs, which are the times of sending and receipt associated with the least delayed timing messages sent from the client to the server in the window; generate, from the first and second plurality of timestamp pairs a plurality of composite timing messages, each of which includes one of said first plurality of timestamp pairs and one of said second plurality of timestamp pairs; and
use said plurality of composite timing messages to estimate the phase offset between the master clock and the slave clock.

**Patentansprüche**

1. Verfahren zur Schätzung des Phasenversatzes zwischen einer Hauptuhr eines Servers und einer Nebenuhr eines Clients, wobei der Server und der Client über ein Netzwerk miteinander kommunizieren, wobei das Verfahren die folgenden Schritte umfasst:

Austausch von Zeitnachrichten zwischen dem Server und dem Client und Aufzeichnen von Zeitstempeln, die die Sende- und Empfangszeiten dieser Nachrichten laut den Haupt- und Nebenuhren sind, innerhalb eines Zeitfensters mit vorbestimmter Dauer;
Bestimmen einer ersten Vielzahl von Zeitstempelpaaren aus diesen Zeitstempeln, die die Sende- und Empfangszeiten der am wenigsten verzögerten Zeitnachrichten sind, die in dem Zeitfenster vom Server an den Client gesendet wurden;
Bestimmen einer zweiten Vielzahl von Zeitstempelpaaren aus diesen Zeitstempeln, die die Sende- und Empfangszeiten der am wenigsten verzögerten Zeitnachrichten sind, die in dem Zeitfenster vom Client an den Server gesendet wurden;
Erzeugen einer Vielzahl von zusammengesetzten Zeitnachrichten aus der ersten und zweiten Vielzahl von Zeitstempelpaaren, von denen jede eines der ersten Vielzahl von Zeitstempelpaaren und eines der zweiten Vielzahl von Zeitstempelpaaren umfasst;
Verwendung der Vielzahl von zusammengesetzten Zeitnachrichten zur Schätzung des Phasenversatzes zwischen der Hauptuhr und der Nebenuhr.

2. Verfahren nach Anspruch 1, wobei die Schätzung des Phasenversatzes den Betrieb eines Kalman-Filters unter Verwendung der Zeitstempel der Zeitnachrichten und die folgenden Schritte umfasst:

Initialisieren des Kalman-Filters durch Betreiben desselben unter Verwendung der gemessenen Zeitstempel der Zeitnachrichten, bis die Schätzungen des Phasenversatzes und der Phasenabweichung innerhalb einer vorgegebenen Genauigkeit geschätzt werden, und anschließend
wiederholt für jedes Zeitfenster:

Betreiben des Kalman-Filters im reinen Vorhersagemodus, um den momentanen Phasenversatz auf der Grundlage des Zustandsvektors zu schätzen, der von den zusammengesetzten Zeitnachrichten aus dem vorherigen Zeitfenster abgeleitet wird;
Erzeugen der zusammengesetzten Zeitnachrichten für das aktuelle Zeitfenster; und

am Ende jedes Zeitfensters: Aktualisierung des Kalman-Filters mit den Werten aus den zusammengesetzten Zeitnachrichten aus dem gerade beendeten Zeitfenster.

3. Verfahren nach Anspruch 1 oder 2, das ferner die folgenden Schritte umfasst:

Berechnen einer Schätzung des Phasenversatzes für jede der verzögerten Zeitnachrichten, und
Berechnen eines geschätzten mittleren Phasenversatzes für jede der zusammengesetzten Zeitnachrichten, der das geometrische Mittel aus Folgendem ist: dem Phasenversatz, der für die Zeitnachricht berechnet wurde, die dem einen der ersten Vielzahl von Zeitstempeln zugeordnet ist, und dem Phasenversatz ist, der für die Zeitnachricht berechnet wurde, die dem einen der zweiten Vielzahl von Zeitstempeln zugeordnet ist.

4. Verfahren nach Anspruch 3, das ferner den Schritt umfasst, als die Zeit, die mit jedem geschätzten mittleren Phasenversatz verbunden ist, das geometrische Mittel der Zeiten des Sendens oder Empfangens der Zeitnachrichten zu berechnen, von denen der geschätzte mittlere Phasenversatz abgeleitet wird.

5. Verfahren nach Anspruch 4, wobei die Schätzung des Phasenversatzes das Betreiben eines Kalman-Filters unter Verwendung der Zeitstempel der Zeitnachrichten und die folgenden Schritte umfasst:

Initialisieren des Kalman-Filters durch Betreiben desselben unter Verwendung der gemessenen Zeitstempel der Zeitnachrichten, bis die Schätzungen des Phasenversatzes und der Phasenabweichung innerhalb einer vorgegebenen Genauigkeit geschätzt werden, und anschließend
wiederholt für jedes Zeitfenster:

Betreiben des Kalman-Filters im reinen Vorhersagemodus, um den momentanen Phasenversatz auf der Grundlage des Zustandsvektors zu schätzen, der von den zusammengesetzten Zeitnachrichten aus dem vorherigen Zeitfenster abgeleitet wird;
Erzeugen der zusammengesetzten Zeitnachrichten für das aktuelle Zeitfenster; und am Ende jedes Zeitfensters: Aktualisierung des Kalman-Filters mit den Werten aus den zusammengesetzten Zeitnachrichten aus dem gerade beendeten Zeitfenster,

wobei der Kalman-Filter mit einer Messgleichung:

$$\frac{(T_1[n_0] - T_2[n_0]) + (T_4[n_1] - T_3[n_1])}{2} = \theta_E$$

und einer Zustandsgleichung:

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n,$$

arbeitet,
und wobei ferner nach dem Schritt des Initialisierens des Kalman-Filters:

$T_1[n_0]$, $T_2[n_0]$, $T_3[n_1]$ und $T_4[n_1]$ jeweils Folgendes sind: die Sendezeit der am wenigsten verzögerten Zeitnachricht, aus der die zusammengesetzte Zeitnachricht erzeugt wird und die vom Server an den Client gesendet wird; die Empfangszeit der am wenigsten verzögerten Zeitnachricht, die vom Server an den Client gesendet wird; die Sendezeit der am wenigsten verzögerten Zeitnachricht, aus der die zusammengesetzte Zeitnachricht erzeugt wird und die vom Client an den Server gesendet wird; und die Empfangszeit der am wenigsten verzögerten Zeitnachricht, die vom Client an den Server gesendet wird;
$\theta_E$ der geschätzte mittlere Phasenversatzwert ist, der vom Schätzalgorithmus verwendet wird;
$\theta_n$ und $\alpha_n$ die Schätzungen für den Versatz und die Abweichung der Nebenuhr im Vergleich zur Hauptuhr zum Zeitpunkt $n$ bei der Ausgabe des Schätzalgorithmus sind;
$\Delta T$ die Zeitspanne zwischen den Zeiten ist, die aufeinanderfolgenden geschätzten mittleren Phasenversätzen zugeordnet sind.

6. Verfahren nach einem der Ansprüche 1 bis 5, ferner umfassend den Schritt des Bestimmens der Lastbedingungen im Netzwerk zwischen dem Server und dem Client und, wenn die Lastbedingungen in einem Fenster als niedrig bestimmt werden, Speichern der in dem Fenster bestimmten zusammengesetzten Zeitnachrichten, während, wenn die Lastbedingungen in einem Fenster als hoch bestimmt werden, gespeicherte zusammengesetzte Zeitnachrichten aus einem früheren Fenster bei der Schätzung des Phasenversatzes verwendet werden.

7. Verfahren nach Anspruch 6, wobei der Schritt des Bestimmens der Lastbedingungen die folgenden Teilschritte umfasst:

Berechnen einer Schätzung eines statistischen Kennwerts der Warteschlangenverzögerung in jedem der Fenster, und
Vergleichen der Schätzung aus dem Fenster, in dem die Lastbedingungen bestimmt werden, mit der Schätzung aus einem oder mehreren vorherigen Fenstern und Vergleichen der Unterschiede mit einem vorgegebenen Schwellenwert.

8. Verfahren nach Anspruch 6 oder 7, wobei, wenn die Lastbedingungen in einem Fenster als hoch bestimmt werden, die gespeicherten zusammengesetzten Zeitnachrichten verwendet werden, um die in diesem Fenster bestimmten zusammengesetzten Zeitnachrichten anzupassen.

9. Zeit-Client mit einer Nebenuhr und einem Prozessor und verbunden mit einer Hauptuhr eines Servers über ein Netzwerk, wobei der Zeit-Client so eingerichtet ist, dass er:

> innerhalb eines Zeitfensters mit vorgegebener Dauer Zeitnachrichten mit dem Server austauscht und Zeitstempel aufzeichnet und empfängt, die die Sende- und Empfangszeiten dieser Nachrichten gemäß der Haupt- und Nebenuhr sind,
> und wobei der Prozessor so eingerichtet ist, dass er:
>
> > aus diesen Zeitstempeln eine erste Vielzahl von Zeitstempelpaaren bestimmt, die die Sende- und Empfangszeiten der am wenigsten verzögerten Zeitnachrichten sind, die in dem Zeitfenster vom Server an den Client gesendet wurden;
> > aus diesen Zeitstempeln eine zweite Vielzahl von Zeitstempelpaaren bestimmt, die die Sende- und Empfangszeiten der am wenigsten verzögerten Zeitnachrichten sind, die in dem Zeitfenster vom Client an den Server gesendet werden,
> > aus der ersten und zweiten Vielzahl von Zeitstempelpaaren eine Vielzahl von zusammengesetzten Zeitnachrichten erzeugt, von denen jede eines der ersten Vielzahl von Zeitstempelpaaren und eines der zweiten Vielzahl von Zeitstempelpaaren umfasst; und
> > die Vielzahl von zusammengesetzten Zeitnachrichten zur Schätzung des Phasenversatzes zwischen der Hauptuhr und der Nebenuhr verwendet.

10. Zeit-Client nach Anspruch 9, wobei der Prozessor bei der Durchführung der Schätzung des Phasenversatzes ferner dazu vorgesehen ist, dass er:
einen Kalman-Filter unter Verwendung der Zeitstempel der Zeitnachrichten betreibt, einschließlich der folgenden Schritte:

> Initialisieren des Kalman-Filters durch Betreiben desselben unter Verwendung der gemessenen Zeitstempel der Zeitnachrichten, bis die Schätzungen des Phasenversatzes und der Phasenabweichung innerhalb einer vorgegebenen Genauigkeit geschätzt werden, und anschließend
> wiederholt für jedes Zeitfenster:
> Betreiben des Kalman-Filters im reinen Vorhersagemodus, um den momentanen Phasenversatz auf der Grundlage des Zustandsvektors zu schätzen, der von den zusammengesetzten Zeitnachrichten aus dem vorherigen Zeitfenster abgeleitet wird:
>
> > Erzeugen der zusammengesetzten Zeitnachrichten für das aktuelle Zeitfenster; und
> > am Ende jedes Zeitfensters: Aktualisierung des Kalman-Filters mit den Werten aus den zusammengesetzten Zeitnachrichten aus dem gerade beendeten Zeitfenster.

11. Zeit-Client gemäß Anspruch 9 oder Anspruch 10, wobei der Prozessor ferner dazu vorgesehen ist, dass er:

> für jede der am wenigsten verzögerten Zeitnachrichten eine Schätzung des Phasenversatzes berechnet; und
> für jede der zusammengesetzten Zeitnachrichten einen geschätzten mittleren Phasenversatz berechnet, der das geometrische Mittel ist aus: dem Phasenversatz, der für die Zeitnachricht berechnet wird, die dem einen der ersten Vielzahl von Zeitstempeln zugeordnet ist, und dem Phasenversatz, der für die Zeitnachricht berechnet wird, die dem einen der zweiten Vielzahl von Zeitstempeln zugeordnet ist.

12. Zeit-Client nach Anspruch 11, wobei der Prozessor ferner dazu vorgesehen ist, dass er als die Zeit, die jedem geschätzten mittleren Phasenversatz zugeordnet ist, das geometrische Mittel der Sende- oder Empfangszeiten des Sendens der Zeitnachrichten berechnet, von denen der geschätzte mittlere Phasenversatz abgeleitet wird.

13. Zeit-Client nach Anspruch 12, wobei der Prozessor bei der Durchführung der Schätzung des Phasenversatzes ferner dazu vorgesehen ist, dass er:
einen Kalman-Filter unter Verwendung der Zeitstempel der Zeitnachrichten betreibt, einschließlich der folgenden Schritte:

Initialisierung des Kalman-Filters durch dessen Betrieb unter Verwendung der gemessenen Zeitstempel der Zeitnachrichten, bis die Schätzungen des Phasenversatzes und der Phasenabweichung innerhalb einer vorgegebenen Genauigkeit geschätzt werden, und anschließend wiederholt für jedes Zeitfenster:

Betreiben des Kalman-Filters im reinen Vorhersagemodus, um den momentanen Phasenversatz auf der Grundlage des Zustandsvektors zu schätzen, der von den zusammengesetzten Zeitnachrichten des vorherigen Zeitfensters abgeleitet wurde,
Erzeugen der zusammengesetzten Zeitnachrichten für das aktuelle Zeitfenster; und
am Ende jedes Zeitfensters: Aktualisieren des Kalman-Filters mit den Werten aus den zusammengesetzten Zeitnachrichten aus dem gerade beendeten Zeitfenster,

$$\frac{(T_1[n_0] - T_2[n_0]) + (T_4[n_1] - T_3[n_1])}{2} = \theta_E$$

und eine Zustandsgleichung:

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A X_{n-1} + w_n,$$

und wobei ferner nach dem Schritt des Initialisierens des Kalman-Filters:

$T_1[n_0]$, $T_2[n_0]$, $T_3[n_1]$ und $T_4[n_1]$ jeweils Folgendes sind: die Sendezeit der am wenigsten verzögerten Zeitnachricht, aus der die zusammengesetzte Zeitnachricht erzeugt wird und die vom Server an den Client gesendet wird; die Empfangszeit der am wenigsten verzögerten Zeitnachricht, die vom Server an den Client gesendet wird; die Sendezeit der am wenigsten verzögerten Zeitnachricht, aus der die zusammengesetzte Zeitnachricht erzeugt wird und die vom Client an den Server gesendet wird; und die Empfangszeit der am wenigsten verzögerten Zeitnachricht, die vom Client an den Server gesendet wird;
$\theta_E$ der geschätzte mittlere Phasenversatzwert ist, der vom Schätzalgorithmus verwendet wird;
$\theta_n$ und $\alpha_n$ die Schätzungen für den Versatz und die Abweichung der Nebenuhr im Vergleich zur Hauptuhr zum Zeitpunkt *n* bei der Ausgabe des Schätzalgorithmus sind;
$\Delta T$ die Zeitspanne zwischen den Zeiten ist, die aufeinanderfolgenden geschätzten mittleren Phasenversätzen zugeordnet sind.

14. Zeit-Client nach einem der Ansprüche 9 bis 13, wobei der Prozessor ferner dazu vorgesehen ist, dass er die Lastbedingungen im Netzwerk zwischen dem Server und dem Client bestimmt und, wenn die Lastbedingungen in einem Fenster als niedrig bestimmt werden, die in dem Fenster bestimmten zusammengesetzten Zeitnachrichten in einem Speicher speichert, während, wenn die Lastbedingungen in einem Fenster als hoch bestimmt werden, zusammengesetzte Zeitnachrichten aus einem früheren Fenster, die in dem Speicher gespeichert sind, bei der Schätzung des Phasenversatzes verwendet werden.

15. Vernetztes Zeitsystem, das Folgendes aufweist:

einen Zeitserver mit einer Hauptuhr;
einen Zeit-Client mit einer Nebenuhr und einem Prozessor; und
ein Netzwerk, das den Server und den Client verbindet,
wobei der Server und der Client dazu vorgesehen sind, dass sie innerhalb eines Zeitfensters mit vorgegebener Dauer Zeitnachrichten miteinander austauschen und Zeitstempel aufzeichnen, die die Sende- und Empfangszeiten dieser Nachrichten gemäß der Haupt- und Nebenuhr sind,
und wobei der Prozessor im Client dazu vorgesehen ist, dass er:

aus diesen Zeitstempeln eine erste Vielzahl von Zeitstempelpaaren bestimmt, die die Sende- und Empfangszeiten der am wenigsten verzögerten Zeitnachrichten sind, die in dem Zeitfenster vom Server zum Client gesendet wurden;
aus diesen Zeitstempeln eine zweite Vielzahl von Zeitstempelpaaren bestimmt, die die Sende- und Empfangszeiten der am wenigsten verzögerten Zeitnachrichten sind, die in dem Zeitfenster vom Client zum Server gesendet wurden;

aus der ersten und zweiten Vielzahl von Zeitstempelpaaren eine Vielzahl von zusammengesetzten Zeitnachrichten erzeugt, von denen jede eines der ersten Vielzahl von Zeitstempelpaaren und eines der zweiten Vielzahl von Zeitstempelpaaren umfasst; und

die Vielzahl von zusammengesetzten Zeitnachrichten zur Schätzung des Phasenversatzes zwischen der Hauptuhr und der Nebenuhr verwendet.

**Revendications**

1. Procédé d'estimation du déphasage entre une horloge maître d'un serveur et une horloge esclave d'un client, le serveur et le client étant communication sur un réseau, le procédé comportant les étapes consistant à :

   dans une fenêtre temporelle de durée prédéterminée, échanger des messages de minutage entre le serveur et le client et enregistrer des estampilles temporelles qui sont les temps d'envoi et de réception de ces messages selon les horloges maître et esclave ;
   déterminer, à partir de ces estampilles temporelles, une première pluralité de paires d'estampilles temporelles, qui sont les temps d'envoi et de réception associés aux messages de minutage les moins retardés envoyés du serveur au client dans la fenêtre ;
   déterminer, à partir de ces estampilles temporelles, une deuxième pluralité de paires d'estampilles temporelles, qui sont les temps d'envoi et de réception associés aux messages de minutage les moins retardés envoyés du client au serveur dans la fenêtre ;
   générer, à partir des première et deuxième pluralités de paires d'estampilles temporelles une pluralité de messages de minutage composites, dont chacun comporte l'une de ladite première pluralité de paires d'estampilles temporelle et l'une de ladite deuxième pluralité de paires d'estampilles temporelles ;
   utiliser ladite pluralité de messages de minutage composites pour estimer le déphasage entre l'horloge maître et l'horloge esclave.

2. Procédé selon la revendication 1 dans lequel ladite estimation du déphasage comporte l'utilisation d'un filtre de Kalman à l'aide des estampilles temporelles desdits messages de minutage, et comporte les étapes consistant à :

   initialiser le filtre de Kalman par son utilisation à l'aide des estampilles temporelles mesurées desdits messages de minutage jusqu'à ce que les estimations du déphasage et du décalage soient estimées dans une précision prédéterminée ; puis
   de manière répétée pour chaque fenêtre temporelle :

      utiliser le filtre de Kalman en mode prédiction seule pour estimer le déphasage instantané sur la base du vecteur d'état dérivé des messages de minutage composites issus de la fenêtre temporelle précédente ;
      générer les messages de minutage composites pour la fenêtre temporelle en cours ; et
      à la fin de chaque fenêtre temporelle, mettre à jour le filtre de Kalman avec les valeurs issues des messages de minutage composites issus de la fenêtre temporelle venant de s'achever.

3. Procédé selon la revendication 1 ou la revendication 2 comportant en outre les étapes consistant à :

   calculer, pour chacun desdits messages de minutage les moins retardés, une estimation du déphasage ; et
   calculer, pour chacun desdits messages de minutage composites, un déphasage moyen estimé qui est la moyenne géométrique : du déphasage calculé pour le message de minutage associé à ladite une de ladite première pluralité d'estampilles temporelles et du déphasage calculé pour le message de minutage associé à ladite une de ladite deuxième pluralité d'estampilles temporelles.

4. Procédé selon la revendication 3, comportant en outre l'étape consistant à calculer, en tant que temps associé à chaque déphasage moyen estimé, la moyenne géométrique des temps d'envoi ou de réception des messages de minutage à partir desquels est dérivé le déphasage moyen estimé.

5. Procédé selon la revendication 4 dans lequel ladite estimation du déphasage comporte l'utilisation d'un filtre de Kalman à l'aide des estampilles temporelles desdits messages de minutage, et comporte les étapes consistant à :

   initialiser le filtre de Kalman par son utilisation à l'aide des estampilles temporelles mesurées desdits messages de minutage jusqu'à ce que les estimations du déphasage et du décalage soient estimées dans une précision prédéterminée ; puis
de manière répétée pour chaque fenêtre temporelle :

utiliser le filtre de Kalman en mode prédiction seule pour estimer le déphasage instantané sur la base du vecteur d'état dérivé des messages de minutage composites issus de la fenêtre temporelle précédente ; générer les messages de minutage composites pour la fenêtre temporelle en cours ; et à la fin de chaque fenêtre temporelle, mettre à jour le filtre de Kalman avec les valeurs issues des messages de minutage composites issus de la fenêtre temporelle venant de s'achever,

dans lequel le filtre de Kalman est utilisé avec une équation de mesure :

$$\frac{(T_1[n_0] - T_2[n_0]) + (T_4[n_1] - T_3[n_1])}{2} = \theta_E$$

et une équation d'état :

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n,$$

et en outre dans lequel, après l'étape consistant à initialiser le filtre de Kalman :

$T_1[n_0]$, $T_2[n_0]$, $T_3[n_1]$ et $T_4[n_1]$ sont, respectivement, le temps d'envoi du message de minutage le moins retardé, à partir duquel est généré le message de minutage composite, envoyé du serveur au client ; le temps de réception dudit message de minutage le moins retardé envoyé du serveur au client ; le temps d'envoi du message de minutage le moins retardé, à partir duquel est généré le message de minutage composite, envoyé du client au serveur ; et le temps de réception dudit message de minutage le moins retardé envoyé du client au serveur ;
$\theta_E$ est la valeur de déphasage moyen estimé utilisée par l'algorithme d'estimation ;
$\theta_n$ et $\alpha_n$ sont les estimations de déphasage et de décalage de l'horloge esclave comparativement au maître au temps $n$ à la sortie de l'algorithme d'estimation ;
$\Delta T$ est la période entre le temps associé à des déphasages moyens estimés consécutifs.

6. Procédé selon l'une quelconque des revendications 1 à 5, comportant en outre l'étape consistant à déterminer les conditions de charge du réseau entre le serveur et le client et, s'il est déterminé que les conditions de charge sont basses dans une fenêtre, stocker les messages de minutage composites déterminés dans ladite fenêtre, mais, s'il est déterminé que les conditions de charge sont élevée dans une fenêtre, utiliser des messages de minutage composites stockés issus d'une fenêtre antérieure dans l'estimation du déphasage.

7. Procédé selon la revendication 6, dans lequel l'étape consistant à déterminer les conditions de charge comporte les sous-étapes consistant à :

calculer une estimation d'une caractéristique statistique du retard de mise en file d'attente dans chacune desdites fenêtres ; et
comparer l'estimation issue de la fenêtre dans laquelle les conditions de charge sont en cours de détermination avec l'estimation issue d'une ou de plusieurs fenêtres précédentes et comparer les différences à un seuil prédéterminé.

8. Procédé selon la revendication 6 ou la revendication 7, dans lequel s'il est déterminé que les conditions de charge sont élevées dans une fenêtre, les messages de minutage composites stockés sont utilisés pour régler des messages de minutage composites déterminés dans cette fenêtre.

9. Client temporel ayant une horloge esclave et un processeur, et connecté à une horloge maître d'un serveur sur un réseau, dans lequel le client temporel est agencé pour :

dans une fenêtre temporelle de durée prédéterminée, échanger des messages de minutage avec le serveur et enregistrer et recevoir des estampilles temporelles qui sont les temps d'envoi et de réception de ces messages selon les horloges maître et esclave ;
et dans lequel le processeur est agencé pour :

déterminer, à partir de ces estampilles temporelles, une première pluralité de paires d'estampilles temporelles, qui sont les temps d'envoi et de réception associés aux messages de minutage les moins retardés envoyés du serveur au client dans la fenêtre ;
déterminer, à partir de ces estampilles temporelles, une deuxième pluralité de paires d'estampilles temporelles, qui sont les temps d'envoi et de réception associés aux messages de minutage les moins retardés envoyés du client au serveur dans la fenêtre ;
générer, à partir des première et deuxième pluralités de paires d'estampilles temporelles, une pluralité de messages de minutage composites, dont chacun comporte l'une de ladite première pluralité de paires d'estampilles temporelle et l'une de ladite deuxième pluralité de paires d'estampilles temporelles ; et
utiliser ladite pluralité de messages de minutage composites pour estimer le déphasage entre l'horloge maître et l'horloge esclave.

**10.** Client temporel selon la revendication 9 dans lequel, lors de la réalisation de ladite estimation du déphasage, le processeur en en outre agencé pour :
utiliser un filtre de Kalman à l'aide des estampilles temporelles desdits messages de minutage, comportant les étapes consistant à :

initialiser le filtre de Kalman par son utilisation à l'aide des estampilles temporelles mesurées desdits messages de minutage jusqu'à ce que les estimations du déphasage et du décalage soient estimées dans une précision prédéterminée ; puis
de manière répétée pour chaque fenêtre temporelle :

utiliser le filtre de Kalman en mode prédiction seule pour estimer le déphasage instantané sur la base du vecteur d'état dérivé des messages de minutage composites issus de la fenêtre temporelle précédente ;
générer les messages de minutage composites pour la fenêtre temporelle en cours ; et
à la fin de chaque fenêtre temporelle, mettre à jour le filtre de Kalman avec les valeurs issues des messages de minutage composites issus de la fenêtre temporelle venant de s'achever.

**11.** Client temporel selon la revendication 9 ou la revendication 10 dans lequel le processeur est en outre agencé pour :

calculer, pour chacun desdits messages de minutage les moins retardés, une estimation du déphasage ; et
calculer, pour chacun desdits messages de minutage composites, un déphasage moyen estimé qui est la moyenne géométrique : du déphasage calculé pour le message de minutage associé à ladite une de ladite première pluralité d'estampilles temporelles et du déphasage calculé pour le message de minutage associé à ladite une de ladite deuxième pluralité d'estampilles temporelles.

**12.** Client temporel selon la revendication 11, dans lequel le processeur est en outre agencé pour calculer, en tant que temps associé à chaque déphasage moyen estimé, la moyenne géométrique des temps d'envoi ou de réception des messages de minutage à partir desquels est dérivé le déphasage moyen estimé.

**13.** Client temporel selon la revendication 12 dans lequel, lors de la réalisation de ladite estimation du déphasage, le processeur est en outre agencé pour :
utiliser un filtre de Kalman à l'aide des estampilles temporelles desdits messages de minutage, comportant les étapes consistant à :

initialiser le filtre de Kalman par son utilisation à l'aide des estampilles temporelles mesurées desdits messages de minutage jusqu'à ce que les estimations du déphasage et du décalage soient estimées dans une précision prédéterminée ; puis
de manière répétée pour chaque fenêtre temporelle :

utiliser le filtre de Kalman en mode prédiction seule pour estimer le déphasage instantané sur la base du vecteur d'état dérivé des messages de minutage composites issus de la fenêtre temporelle précédente ;
générer les messages de minutage composites pour la fenêtre temporelle en cours ; et
à la fin de chaque fenêtre temporelle, mettre à jour le filtre de Kalman avec les valeurs issues des messages de minutage composites issus de la fenêtre temporelle venant de s'achever,

$$\frac{(T_1[n_0] - T_2[n_0]) + (T_4[n_1] - T_3[n_1])}{2} = \theta_E$$

et une équation d'état :

$$X_n = \begin{bmatrix} \theta_n \\ \alpha_n \end{bmatrix} = \begin{bmatrix} 1 & \Delta T \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n,$$

et en outre dans lequel, après l'étape consistant à initialiser le filtre de Kalman :

$T_1[n_0]$, $T_2[n_0]$, $T_3[n_1]$ et $T_4[n_1]$ sont, respectivement, le temps d'envoi du message de minutage le moins retardé, à partir duquel est généré le message de minutage composite, envoyé du serveur au client ; le temps de réception dudit message de minutage le moins retardé envoyé du serveur au client ; le temps d'envoi du message de minutage le moins retardé, à partir duquel est généré le message de minutage composite, envoyé du client au serveur ; et le temps de réception dudit message de minutage le moins retardé envoyé du client au serveur ;
$\theta_E$ est la valeur de déphasage moyen estimé utilisée par l'algorithme d'estimation ;
$\theta_n$ et $\alpha_n$ sont les estimations de déphasage et de décalage de l'horloge esclave comparativement au maître au temps $n$ à la sortie de l'algorithme d'estimation ;
$\Delta T$ est la période entre le temps associé à des déphasages moyens estimés consécutifs.

14. Client temporel selon l'une quelconque des revendications 9 à 13, dans lequel le processeur est en outre agencé pour déterminer les conditions de charge du réseau entre le serveur et le client et, s'il est déterminé que les conditions de charge sont basses dans une fenêtre, stocker les messages de minutage composites déterminés dans ladite fenêtre, mais, s'il est déterminé que les conditions de charge sont élevée dans une fenêtre, utiliser des messages de minutage composites stockés issus d'une fenêtre antérieure stockée dans ladite mémoire dans l'estimation du déphasage.

15. Système temporel en réseau ayant :

un serveur temporel qui a une horloge maître ;
un client temporel ayant une horloge esclave et un processeur ; et
un réseau connectant ledit serveur et ledit client,
dans lequel le serveur et le client sont agencés pour, dans une fenêtre temporelle durée prédéterminée, échanger des messages de minutage l'un avec l'autre et enregistrer des estampilles temporelles qui sont les temps d'envoi et de réception de ces messages selon les horloges maître et esclave ;
et dans lequel le processeur dans le client est agencé pour :

déterminer, à partir de ces estampilles temporelles, une première pluralité de paires d'estampilles temporelles, qui sont les temps d'envoi et de réception associés aux messages de minutage les moins retardés envoyés du serveur au client dans la fenêtre ;
déterminer, à partir de ces estampilles temporelles, une deuxième pluralité de paires d'estampilles temporelles, qui sont les temps d'envoi et de réception associés aux messages de minutage les moins retardés envoyés du client au serveur dans la fenêtre ;
générer, à partir des première et deuxième pluralités de paires d'estampilles temporelles, une pluralité de messages de minutage composites, dont chacun comporte l'une de ladite première pluralité de paires d'estampilles temporelle et l'une de ladite deuxième pluralité de paires d'estampilles temporelles ; et
utiliser ladite pluralité de messages de minutage composites pour estimer le déphasage entre l'horloge maître et l'horloge esclave.

FIG. 1

Time line

w-th window filling

(w+1)-th window filling

(w+2)-th window filling

(w+3)-th window filling

w-th update

(w+1)-th update

(w+2)-th update

Timestamp set: $T_1$-$T_4$

Window Filling Phase

- Kalman filter operates in prediction only mode and outputs estimated instantaneous phase offset using its state vector and the current time from the most recent Master's timestamp.
- In parallel the timestamps are processed and the MDPs identified.

KF Update Phase

- Kalman filter update phase which executes quickly and is completed between last sample of one window and the start of the next.
- The 4 geometrical means of the instantaneous phase values and their corresponding time samples from the last window are used consecutively for the predict and update phases of the KF.
- After processing all 4 values the KF state vector contains new values that are used for prediction during the Window Filling Phase of the next window.

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150163154 A
- EP 1990938 A
- WO 2016103227 A

- GB 2016053631 W
- US 9184861 B, Aweya
- US 9112628 B, Aweya

### Non-patent literature cited in the description

- **A. BLETSAS.** Evaluation of Kalman filtering for network time keeping. *IEEE Trans. on Ultrason., Ferroel., and Freq. Control,* September 2005